# EUROPEAN PATENT APPLICATION

(11) **EP 4 435 547 A1**
(43) Date of publication of application: **25.09.2024**
(21) Application number: 22895282.6
(22) Date of filing: 13.10.2022
(51) Int. Cl.: G05D 1/02, A01B 69/00, G05D 1/00

(54) **REMOTE CONTROL SYSTEM FOR WORK MACHINE**

(30) Priority: 18.11.2021 JP 2021187953
(71) Applicant: KUBOTA CORPORATION, Osaka-shi, Osaka 556-8601 (JP)
(72) Inventor: KOYAMA Yu, Sakai-shi, Osaka 590-0823 (JP); UMEMOTO Susumu, Sakai-shi, Osaka 590-0823 (JP); ISHIKAWA Shinnosuke, Sakai-shi, Osaka 590-0823 (JP); SAKUTA Ken, Sakai-shi, Osaka 590-0823 (JP)
(74) Representative: Müller-Boré & Partner Patentanwälte PartG mbB
(86) International application number: PCT/JP2022/038144
(87) International publication number: WO 2023/089996

(57) **Abstract**

Risk hedging is performed even if a communication delay occurs during the remote control of a working machine (1).

A remote control system (100) for a working machine includes a monitor (25) to monitor a surrounding area of a working machine which is allowed to travel, and output a piece of monitoring data indicating a result of monitoring the surrounding area, a first assignor (21d) to assign a first time stamp to the piece of monitoring data, a storage and/or a memory (42, 22) to store a plurality of the pieces of monitoring data and a plurality of the first time stamps, a remote control terminal (30) to receive the piece of monitoring data and display the result of monitoring and to be operated to transmit a remote control signal, a second assignor (31d) to assign a second time stamp to the remote control signal, a signal acceptor (41a, 21a) to accept the remote control signal, determine whether the accepted remote control signal is appropriate based on the second time stamp assigned to the accepted remote control signal and the first time stamp assigned to the monitoring data stored in the storage and/or the memory, and invalidate the remote control signal determined to be not appropriate, and a controller (21) to control an action of the working machine based on the remote control signal determined to be appropriate by the signal acceptor.

## Description

### Technical Field

The present invention relates to a remote control system for a working machine to remotely control a working machine capable of traveling.

### Background Art

As a remote control system for a working machine, for example, a system disclosed in Patent Literature 1 (PTL 1) is known. The remote control system for a working machine in PTL 1 includes a working machine (working vehicle) that travels autonomously, a vehicle controller mounted on the working machine, and a remote control terminal (teleoperating device) capable of remotely controlling the working machine. The remote control terminal is operated by a human operator, and wirelessly transmits a remote control signal indicating a work area in an agricultural field and content of work to the vehicle controller. The vehicle controller controls the working machine based on the received remote control signal, and causes the working machine to perform work or travel in the work area of the agricultural field. The surrounding area of the working machine is monitored by an obstacle sensor provided in or on the working machine and a camera provided in or on the working machine or the agricultural field. The monitoring data obtained by the obstacle sensor and the camera is transmitted to the remote control terminal and displayed on a display of the remote control terminal. The human operator can remotely control the working machine using the remote control terminal while known the condition of the surrounding area of the working machine by looking at indications displayed on the display.

### Citation List

### Patent Literature

PTL 1: Japanese Patent No. 6384545

### Summary of Invention

### Technical Problem

There may be cases in which, during the remote control of the working machine, the real-time property of the monitoring data or the remote control signal is impaired due to a communication dela and the condition of the surrounding area of the actual working machine differs from the condition of the surrounding area of the working machine monitored by the remote control terminal. In such cases, if the controller of the vehicle controls the travel or work actions of the working machine based on the remote control signal from the remote control terminal, the working machine may operate uselessly (meaninglessly) or the working machine may collide with an obstacle.

In view of the above, an object of the present invention is to provide a remote control system for a working machine which can perform risk hedging even if a communication delay occurs during the remote control of the working machine.

### Solution to Problem

Technical solutions to attain the above object of the present invention include the following characteristic features.

A remote control system for a working machine according to an aspect of the present invention includes a monitor to monitor a surrounding area of a working machine which is allowed to travel, and output a piece of monitoring data indicating a result of monitoring the surrounding area, a first assignor to assign a first time stamp to the piece of monitoring data, a storage and/or a memory to store a plurality of the pieces of monitoring data together with a plurality of the first time stamps assigned to the plurality of pieces of monitoring data, a remote control terminal to receive the piece of monitoring data and display the result of monitoring indicated by the piece of monitoring data and to be operated to transmit a remote control signal to remotely control the working machine, a second assignor to assign a second time stamp to the remote control signal when the remote control signal is transmitted from the remote control terminal, a signal acceptor to accept the remote control signal transmitted from the remote control terminal, and a controller to control an action of the working machine, wherein the signal acceptor determines whether the accepted remote control signal is appropriate based on the second time stamp assigned to the accepted remote control signal and the first time stamp assigned to the piece of monitoring data stored in the storage and/or the memory, and invalidates the remote control signal determined to be not appropriate, and the controller controls the action of the working machine based on the remote control signal determined to be appropriate by the signal acceptor.

The signal acceptor may acquire, from the storage and/or the memory, a specific piece of monitoring data and a latest piece of monitoring data, the specific piece of monitoring data being one of the plurality of pieces of monitoring data that has assigned thereto the first time stamp indicating a first time identical to a second time indicated by the second time stamp assigned to the accepted remote control signal or a first time earlier than and closest to the second time, and detects a difference between the specific piece of monitoring data and the latest piece of monitoring data, if the difference does not exceed a predetermined degree, determine that the accepted remote control signal is appropriate, transfer the remote control signal to the controller, and allow the controller to control the action of the working machine based on the remote control signal, and if the difference exceeds the predetermined degree, determine that the accepted remote control signal is not appropriate, invalidate the remote control signal, and prevent the controller from controlling the action of the working machine based on the remote control signal.

The first assignor may, upon each acquisition of a piece of monitoring data from the monitor, assign the first time stamp indicating a current time to the piece of monitoring data.

The second assignor may, when the remote control terminal transmits the remote control signal, assign the second time stamp indicating a current time to the remote control signal.

The remote control terminal may include a display and may be operable to acquire a latest one of the plurality of pieces of monitoring data from the storage and/or the memory and display the result of monitoring indicated by the acquired piece of monitoring data on the display. The second assignor may refer to the first time stamp assigned to the piece of monitoring data indicating the result of monitoring displayed on the display when the remote control terminal is operated, and assign the second time stamp indicating a second time identical to a first time indicated by the first time stamp to the remote control signal.

The signal acceptor may, if the signal acceptor determines that the accepted remote control signal is appropriate, validate the remote control signal by transferring the remote control signal to the controller. The signal acceptor may, if the signal acceptor determines that the accepted remote control signal is not appropriate, invalidate the remote control signal by discarding the remote control signal without transferring the remote control signal to the controller.

The signal acceptor may provide a notification indicating that the remote control signal has been invalidated to the remote control terminal. The remote control terminal may include a display and may be operable to, upon receipt of the notification from the signal acceptor, cause the display to display content of the notification.

The remote control terminal may include a manual operator to be operated by a human operator, and generate the remote control signal corresponding to an action instruction for the working machine inputted by operating the manual operator. The signal acceptor may determine whether the remote control signal is appropriate based on the action instruction corresponding to the accepted remote control signal.

The remote control terminal may include a manual operator to be operated by a human operator, and generate the remote control signal corresponding to an action instruction for the working machine inputted by operating the manual operator. The signal acceptor may determine whether the remote control signal is appropriate if the action instruction corresponding to the accepted remote control signal is an action instruction relating to travel of the working machine or work performed by a working device coupled to the working machine.

The remote control system may further include a communication device provided in or on the working machine to perform wireless communication, and an assistant provided somewhere other than the working machine and other than the remote control terminal. The remote control terminal may include a first communicator to perform communication. The assistant may include a second communicator to perform communication with the communication device and the first communicator. The monitor and the first assignor may be provided in or on the working machine. The second assignor may be provided in or on the remote control terminal. The storage and/or the memory and the signal acceptor may be provided in or on the assistant.

The remote control system may further include a communication device provided in or on the working machine to perform wireless communication, and an assistant provided somewhere other than the working machine and other than the remote control terminal. The remote control terminal may include a first communicator to perform communication. The assistant may include a second communicator to perform communication with the communication device and the first communicator. The monitor and the first assignor may be provided in or on the working machine. The second assignor may be provided in or on the remote control terminal. The storage and/or the memory and the signal acceptor may be provided in or on the working machine and/or the assistant.

The communication device may perform wireless communication via a mobile telephone network, a wide area network, and/or a narrow area network. The first communicator and the second communicator may perform wireless and/or wired communication via a mobile telephone network, a land-line telephone network, a wide area network, and/or a narrow area network.

The remote control system may further include a communication device provided in or on the working machine to perform wireless communication. The remote control terminal may include a first communicator to perform communication. The monitor, the first assignor, the storage and/or the memory, and the signal acceptor may be provided in or on the working machine. The second assignor may be provided in or on the remote control terminal.

The communication device may perform wireless communication via a mobile telephone network, a wide area network, and/or a narrow area network. The first communicator may perform wireless and/or wired communication via a mobile telephone network, a land-line telephone network, a wide area network, and/or a narrow area network.

The wide area network may include the Internet. The narrow area network may include a local area network.

The working machine may include an agricultural machine to perform agricultural work in an agricultural field. The monitor may be provided in or on the agricultural machine and include a camera and/or a sensor to detect an object in the surrounding area of the agricultural machine. The monitoring data may include image data of the surrounding area of the agricultural machine captured by the camera and/or detection data indicating a result of detection by the sensor.

### Advantageous Effects of Invention

With the present invention, it is possible to provide a remote control system for a working machine that can perform risk hedging even if a communication delay occurs during the remote control of the working machine.

### Brief Description of Drawings

[FIG. 1A] FIG. 1A is a schematic block diagram of a remote control system for a working machine according to an embodiment.
[FIG. 1B] FIG. 1B is a block diagram illustrating details of a portion of each element in FIG. 1A.
[FIG. 2] FIG. 2 is a side view of a working machine in FIG. 1A.
[FIG. 3] FIG. 3 is a block diagram illustrating an electrical configuration of the working machine in FIG. 1A.
[FIG. 4] FIG. 4 is a block diagram illustrating an electrical configuration of the remote control terminal in FIG. 1A.
[FIG. 5] FIG. 5 is a block diagram illustrating an electrical configuration of the assistant in FIG. 1A.
[FIG. 6A] FIG. 6A illustrates a remote-monitoring operation screen displayed by the remote control terminal in FIG. 1A.
[FIG. 6B] FIG. 6B illustrates the remote-monitoring operation screen including a notification of invalidation.
[FIG. 7A] FIG. 7A is a flowchart illustrating actions of a controller of the working machine, the assistant, and the remote control terminal in FIG. 1B.
[FIG. 7B] FIG. 7B is a continuation of the flowchart in FIG. 7A.
[FIG. 8] FIG. 8 is a flowchart illustrating actions of an assistant according to another embodiment.
[FIG. 9] FIG. 9 is a block diagram of a remote control system for a working machine according to another embodiment.
[FIG. 10] FIG. 10 is a block diagram of a remote control system for a working machine according to another embodiment.
[FIG. 11] FIG. 11 is a block diagram of a remote control system for a working machine according to another embodiment.
[FIG. 12] FIG. 12 is a block diagram of a remote control system for a working machine according to another embodiment.
[FIG. 13] FIG. 13 illustrates a display of a remote control terminal according to another embodiment.

### Description of Embodiments

The following description discusses embodiments of the present invention with reference to the drawings. Note that, for convenience, the same elements and corresponding elements are denoted by the same reference numerals.

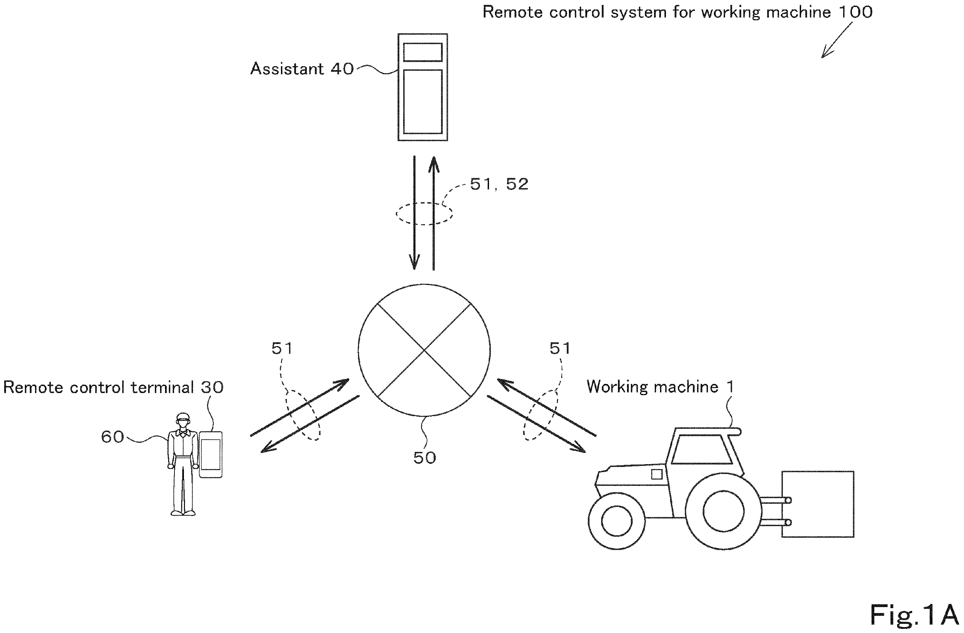

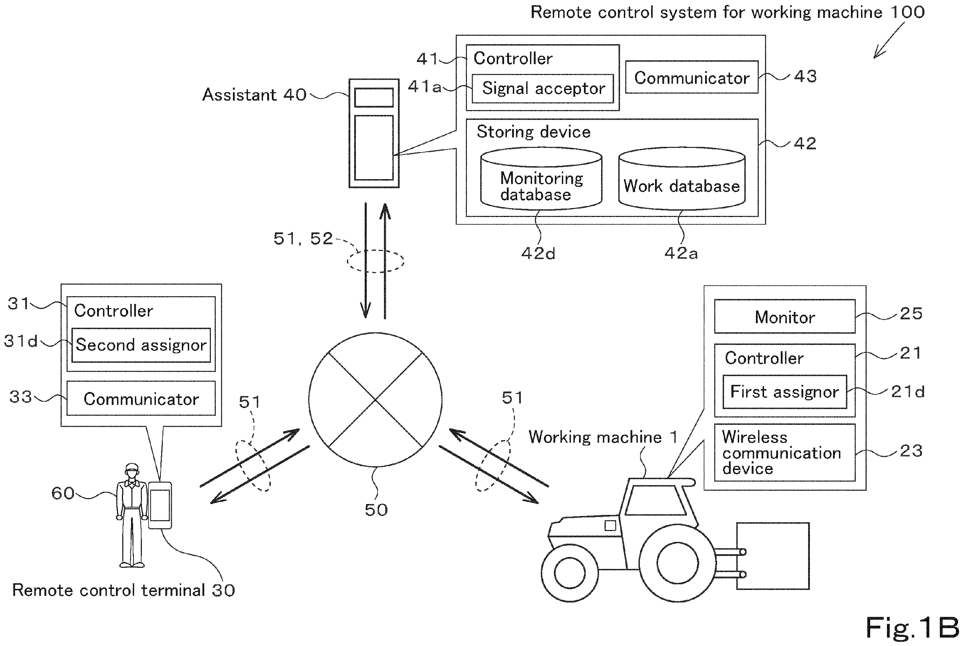

FIG. 1A is a schematic block diagram of a remote control system 100 for a working machine according to an embodiment. FIG. 1B is a block diagram illustrating details of a portion of each element in FIG. 1A.

The remote control system 100 for a working machine illustrated in FIGS. 1A and 1B includes a working machine 1, a remote control terminal 30, and an assistant 40. The working machine 1 is, for example, an agricultural machine capable of autonomously traveling and performing work (also referred to as an autonomous traveling agricultural machine). In the present embodiment, the working machine 1 is a tractor which is an example of an agricultural machine to perform agricultural work in an agricultural field.

The remote control terminal 30 is a portable terminal device such as a tablet device or a smartphone, or a stationary terminal device installed in a base station (not illustrated). In the present embodiment, the remote control terminal 30 is a portable terminal device carried and operated by a human operator 60. The remote control terminal 30 is a device to remotely control (remotely operate and remotely monito) the working machine 1.

The assistant 40 is a server, a personal computer (PC), or the like. The assistant 40 is installed in, for example, a manufacturer of the working machine 1 or a management center. The assistant 40 assists the remote control terminal 30 in remote controlling the working machine 1. Furthermore, the assistant 40 manages various information and data for the working machine 1 to perform work in the agricultural field or the like.

The working machine 1 can be connected to the Internet 50 via a mobile telephone network 51 and/or the like by a wireless communication device 23 thereof (FIG. 1B). The remote control terminal 30 can be connected to the Internet 50 via the mobile telephone network 51 and/or the like by a communicator 33 thereof (FIG. 1B). The assistant 40 can be connected to the Internet 50 via the mobile telephone network 51, a land-line telephone network 52, and/or the like by a communicator 43 thereof (FIG. 1B) which will be described later.

The wireless communication device 23 of the working machine 1 and the communicator 33 of the remote control terminal 30 can be connected to (access) the assistant 40 via the mobile telephone network 51 or the land-line telephone network 52 and the Internet 50 or the like. The assistant 40 mutually communicates with the wireless communication device 23 of the working machine 1 and the communicator 33 of the remote control terminal 30 by the communicator 43 via the mobile telephone network 51 or the land-line telephone network 52 and the Internet 50 or the like.

Note that the wireless communication device 23 of the working machine 1, the remote control terminal 30, and the assistant 40 may communicate with each other via a wireless and/or wired LAN or the like in addition to or instead of the mobile telephone network 51, the land-line telephone network 52, and the Internet 50. The Internet 50 is an example of a wide area network using a public communication network. The LAN is an example of a narrow area network using a dedicated communication line.

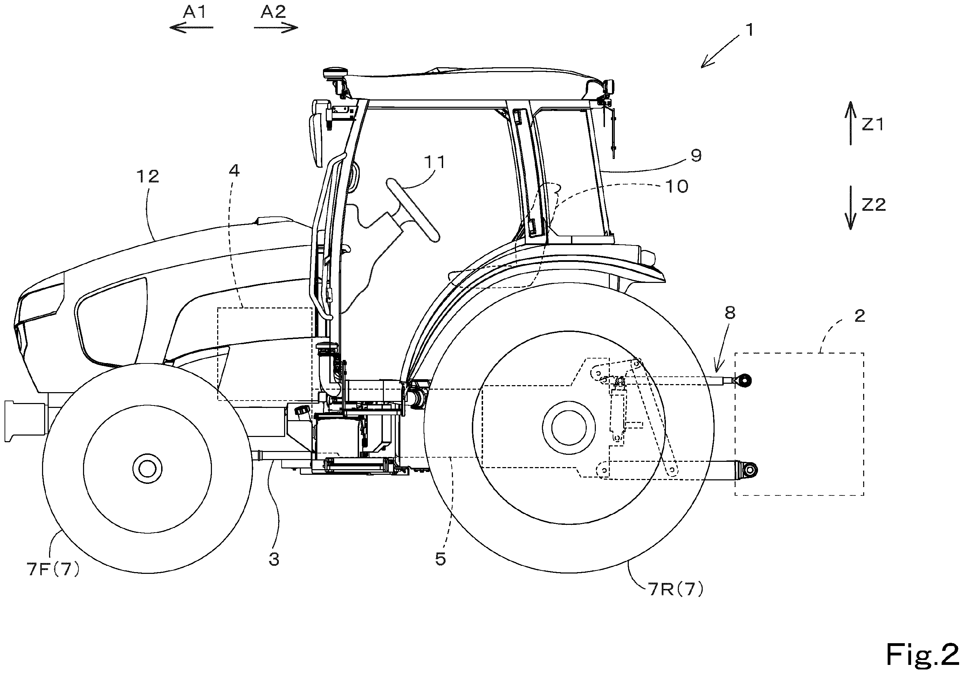

FIG. 2 is a side view of the working machine 1. The working machine 1 in the present embodiment is a tractor as illustrated in FIG. 2. Note that the working machine 1 may alternatively be an agricultural machine, a construction machine, or a working vehicle, other than a tractor.

As illustrated in FIG. 2, a vehicle body 3 of the working machine 1 is provided with traveling devices 7. The traveling devices 7 are provided at the left and right sides of the vehicle body 3, and support the vehicle body 3 such that the vehicle body 3 is allowed to travel. The traveling devices 7 are wheeled traveling devices including front wheels 7F and rear wheels 7R formed of tires. Alternatively, traveling devices including crawler front wheels or crawler rear wheels may be used.

A prime mover 4, a transmission 5, and a cabin 9 are provided on the vehicle body 3. The prime mover 4 includes an engine (a diesel engine or a gasoline engine), an electric motor, and/or the like. The transmission 5 performs speed changes to change the propelling force of the traveling devices 7 and switches the traveling devices 7 between forward travel and reverse travel.

The cabin 9 houses an operator's seat 10 and a steering device 11. The working machine 1 is a tractor capable of traveling and performing work without the assistance of an attendant, but the working machine 1 can also be steered by a worker seated on the operator's seat 10 operating the steering device 11. The cabin 9 is a protection device to protect the operator's seat 10 by surrounding the front, rear, upper, left, and right portions of the operator's seat 10. Instead of the cabin 9, a ROPS or the like covering at least the upper portion of the operator's seat 10 may also be used.

The direction indicated by an arrow A1 in FIG. 2 is the front of a working device (implement or the like) 2. The direction indicated by an arrow A2 is the rear of the working device 2. The direction indicated by an arrow Z1 is the upward direction of the working device 2. The direction indicated by an arrow Z2 is the downward direction of the working device 2. The direction perpendicular to the arrows A1, A2, Z1, and Z2 is a widthwise direction (left-right direction) of the working machine 1. The near side in FIG. 2 is the left of the working machine 1, and the far side is the right of the working machine.

A coupler 8 is provided at the rear portion of the vehicle body 3. The coupler 8 includes a three-point linkage and/or the like. The working device 2 can be detachably connected to the coupler 8. By connecting the working device 2 to the coupler 8 and driving the traveling devices 7, the working machine 1 (the vehicle body 3) can be caused to travel and the working device 2 can be towed. Furthermore, by the coupler 8, the working device 2 can be raised and lowered, and the posture of the working device 2 can be changed.

Examples of the working device 2 include a cultivator for cultivation, a fertilizer spreader for spreading a fertilizer, an agricultural chemical spreader for spreading an agricultural chemical, a harvester for harvesting, a mower for mowing grass or the like, a tedder for tedding grass or the like, a rake for raking grass or the like, and a baler for baling grass or the like.

A hood 12 is provided in the front of the cabin 9. The hood 12 is attached to the vehicle body 3. A storage room (not assigned reference numerals) is defined between the hood 12 and the vehicle body 3. The storage room houses not only the prime mover 4 but also a cooling fan, a radiator, a battery, and the like (not illustrated).

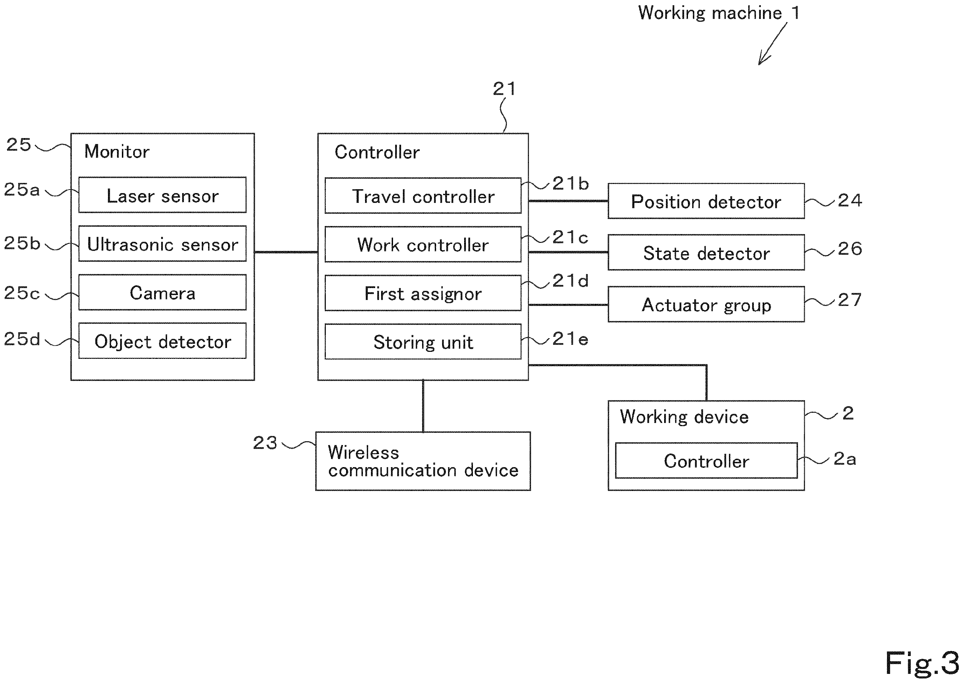

FIG. 3 is a block diagram illustrating an electrical configuration of the working machine 1 illustrated in FIG. 1A, etc. The working machine 1 includes a controller 21, the wireless communication device 23, a position detector 24, a monitor 25, a state detector 26, an actuator group 27, and the working device 2. These are electrically connected via an in-vehicle communication network such as a CAN, LIN, or FlexRay in the working machine 1.

The controller 21 includes an electronic controller (ECU) including CPU(s) and one or more memories. The controller 21 controls operations of elements of the working machine 1. The controller 21 includes a travel controller 21b, a work controller 21c, a first assignor 21d, and a storing unit (storage and/or memory) 21e. The storing unit 21e includes a volatile or non-volatile memory and/or the like. The storing unit 21e stores, in a read-write format, various information and data for the controller 21 to control the operations of the elements of the working machine 1. The travel controller 21b, the work controller 21c, and the first assignor 21d include software program(s) and/or hardware.

The wireless communication device 23 performs wireless communication via the mobile telephone network 51 and/or the Internet 50. The wireless communication device 23 can also perform wireless communication via a wireless LAN.

The position detector 24 is provided, for example, at the upper portion of the cabin 9 (FIG. 2) (not illustrated in detail). Note that the location of the position detector 24 is not limited to the upper portion of the cabin 9, and may be another location on the vehicle body 3 or a predetermined location on the working device 2. The position detector 24 detects its position (measured position information including latitude and longitude) using a satellite positioning system. That is, the position detector 24 receives signal(s) (positions of positioning satellites, transmission time, correction information, or the like) transmitted from the positioning satellite(s), and detects its position based on the signals. The position detector 24 may detect, as its position, a position corrected based on a signal for correction or the like from a base station (reference station) capable of receiving the signals from the positioning satellites.

The position detector 24 may include an inertial measurement unit such as a gyroscope sensor and/or an acceleration sensor. In such a case, the position detector 24 may correct, using the inertial measurement unit, the position (latitude and longitude) detected based on the signals received from the positioning satellites, and detect the corrected position as its position. The position detector 24 regards the detected position as the position of the working machine 1. Alternatively, the position detector 24 may calculate the position of the working machine 1 based on the detected position of the position detector 24 and the outer shape information, which is stored in advance, of the working machine 1. The position detector 24 may calculate the position of the working device 2 based on the detected position of the position detector 24, the outer shape information, which is stored in advance, of the working device 2, and the position of the attached working device 2 with respect to the vehicle body 3.

The monitor 25 includes laser sensor(s) 25a, ultrasonic sensor(s) 25b, camera(s) 25c, and object detector(s) 25d. The laser sensor 25a, the ultrasonic sensor 25b, and the one camera 25c are provided at appropriate positions such as the front portion, the rear portion, the left or right portion, and/or the upper portion of the working machine 1 (not illustrated in detail), and detect the condition of the surrounding area of the working machine 1. Note that the monitor 25 may include only at least one of the laser sensor 25a, the ultrasonic sensor 25b, and the camera 25c. The monitor 25 may include detector(s) such as sensor(s) other than those described above.

The laser sensor 25a includes an optical sensor such as a LiDAR (light detection and ranging) sensor. The laser sensor 25a emits pulsed measurement light (laser light) millions of times per second from a light source such as a laser diode, performs scanning using the measurement light horizontally or vertically by reflecting the measurement light with a rotating mirror, and projects the measurement light onto a predetermined detection range (sensing range). Then, the laser sensor 25a receives, at a light receiving element (photodetector), the measurement light reflected by an object.

The object detector 25d detects the presence or absence of an object, the position of the object, the type of the object, and/or the like based on a light reception signal output from the light receiving element of the laser sensor 25a. The object detector 25d detects the distance to the object based on the time from the emission of the measurement light from the laser sensor 25a to the reception of the reflected light (TOF (time of flight) method). Examples of the object detected by the object detector 25d include a site where the working machine 1 travels and performs work, an agricultural field, crops in the agricultural field, a ground surface, a road surface, other objects, obstacles, people, and the like.

The ultrasonic sensor 25b includes an airborne ultrasonic sensor such as sonar. The ultrasonic sensor 25b transmits, from a wave transmitter, measurement waves (ultrasonic waves) to a predetermined detection range, and receives, at a wave receiver, the measurement waves reflected by an object. The object detector 25d detects the presence or absence of an object, the position of the object, the type of the object, and/or the like based on a signal output from the wave receiver of the ultrasonic sensor 25b. The object detector 25d further detects the distance to the object based on the time from the transmission of the measurement waves from the ultrasonic sensor 25b to the reception of the reflected waves (TOF method).

The camera 25c includes an imager such as a CCD (charge coupled device) camera with a CCD image sensor or a CMOS (complementary metal oxide semiconductor) camera with a CMOS image sensor. The camera 25c captures an image of the surrounding area of the working machine 1 and outputs an image signal. The object detector 25d detects the presence or absence of an object, the position of the object, the type of the object, and/or the like based on the image signal output from the camera 25c.

The monitor 25 monitors the condition of the surrounding area of the working machine 1 and the working device 2 by the laser sensor 25a, the ultrasonic sensor 25b, the camera 25c, and the object detector 25d, and outputs monitoring data indicating the result of monitoring to the controller 21. The monitoring data includes at least image data captured by the camera 25c and detection data of the object detected by the object detector 25d.

Upon the controller 21 acquiring the monitoring data from the monitor 25, the first assignor 21d assigns a first time stamp to the monitoring data. The controller 21 transmits the monitoring data, which has assigned thereto the first time stamp, to the assistant 40 via the wireless communication device 23. The transmission of the monitoring data and the first time stamp assigned thereto by the controller 21 is performed at a predetermined cycle or in response to a request from the assistant 40.

The state detector 26 includes sensors provided at portions of the working machine 1 and/or the working device 2. The state detector 26 detects action states such as traveling and working states of the working machine 1 and the working device 2 based on output signals from the sensors. The state detector 26 further acquires the position (the position of the working machine 1, the position of the working device 2) detected by the position detector 24 at a predetermined cycle, and detects changes (transition) in the position as the action states of the working machine 1 and the working device 2. The state detector 26 then generates action detection data indicating the result of detection of the action states of the working machine 1 and the working device 2, and outputs the action detection data to the controller 21.

The actuator group 27 includes electric or hydraulic-pressure motor(s), cylinder(s), control valve(s), and/or the like to actuate the traveling device 7, the transmission 5, the prime mover 4, the coupler 8, and the like of the working machine 1. The travel controller 21b of the controller 21 actuates predetermined actuators included in the actuator group 27 to drive the traveling device 7, the transmission 5, the prime mover 4, and the like, thus controlling the travel of the working machine 1.

The work controller 21c communicates with a controller 2a included in the working device 2, and causes the controller 2a to control the action of the working device 2. That is, the work controller 21c controls work done by the working device 2 via the controller 2a.

Based on the monitoring data output from the monitor 25, the action detection data output from the state detector 26, the position of the working machine 1 output from the position detector 24, and/or the like, the controller 21 causes the travel controller 21b to control the travel of the working machine 1, causes the work controller 21c to control work actions, and controls other actions of the working machine 1. When the wireless communication device 23 receives a remote control signal transmitted from the remote control terminal 30, the controller 21 controls the travel, work action, and other actions of the working machine 1 and/or the like (and/or the working device 2) based on the remote control signal in addition to the above-described data.

If the object detector 25d detects the presence of an object in the direction of travel of the working machine 1 or the direction of action the working device 2 when the controller 21 controls the travel or work of the working machine 1 and/or the like, the controller 21 controls the traveling device 7, the working device 2, and/or the like to stop the travel and/or work to avoid collision with the object (collision avoiding action).

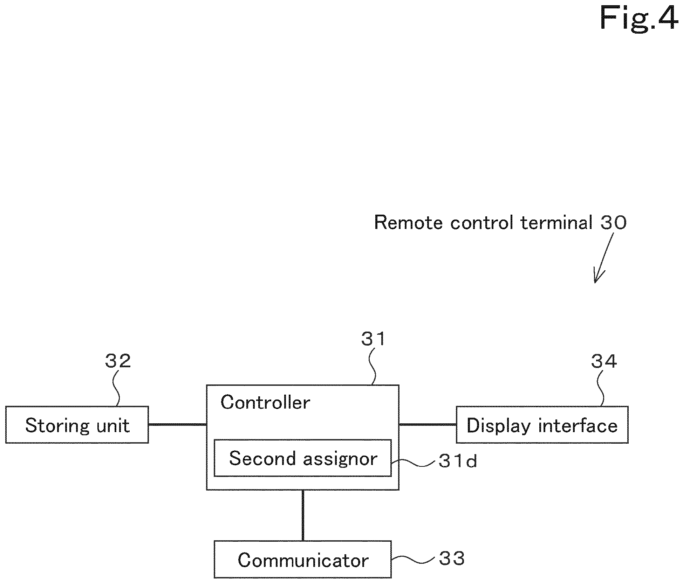

FIG. 4 is a block diagram illustrating an electrical configuration of the remote control terminal 30 illustrated in FIG. 1A, etc. The remote control terminal 30 includes a controller 31, a storing unit 32, a communicator 33, and a display interface (manual operator) 34. The controller 31 includes CPU(s) and the like. The controller 31 controls operations of elements of the remote control terminal 30. The controller 31 includes a second assignor 31d. The second assignor 31d includes software program(s). As another example, the second assignor 31d may include hardware different from the controller 31.

The storing unit 32 includes a volatile or non-volatile memory and/or the like. The storing unit 32 stores, in a read-write format, various information and data for the controller 31 to control operations of elements of the remote control terminal 30. The communicator 33 performs wireless communication via the mobile telephone network 51 and/or the Internet 50. The communicator 33 can also perform wireless communication via a wireless LAN.

The display interface 34 includes, for example, a touchscreen and hardware switch(se). The display interface 34 displays information for remote control of the working machine 1. It is also possible to perform operations on the display interface 34 to remotely control the working machine 1. As another example, instead of the display interface 34, a display and a manual operator independent of each other may be provided in the remote control terminal 30.

When the human operator 60 operates the display interface 34 to input an action instruction for the working machine 1, the controller 31 generates a remote control signal corresponding to the action instruction. The second assignor 31d assigns a second time stamp to the generated remote control signal. The controller 31 transmits the remote control signal, which has assigned thereto the second time stamp, to the assistant 40 via the communicator 33.

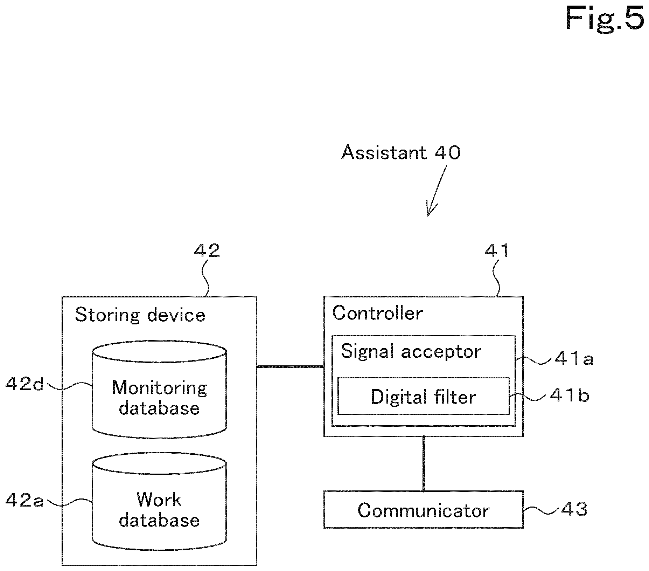

FIG. 5 is a block diagram illustrating an electrical configuration of the assistant 40 illustrated in FIG. 1A, etc. The assistant 40 includes a controller 41, a storing device (storage and/or memory) 42, and the communicator 43. The controller 41 includes CPU(s) and the like. The controller 41 controls operations of elements of the assistant 40. The controller 41 includes a signal acceptor 41a. The signal acceptor 41a includes a digital filter 41b. The signal acceptor 41a includes software program(s). As another example, the signal acceptor 41a may include hardware different from the controller 41. The digital filter 41b may be provided independently of the signal acceptor 41a.

The storing device 42 includes a non-volatile memory, a hard disk, and/or the like. The storing device 42 includes a work database 42a and a monitoring database 42d therein. The work database 42a stores (records) a plurality of pieces of work data for the working machine 1 to perform work. The monitoring database 42d stores (records) a plurality of pieces of monitoring data obtained by the monitor 25 (FIG. 3).

The communicator 43 performs wireless and/or wired communication via the mobile telephone network 51 or the land-line telephone network 52 and via the Internet 50. The communicator 43 can also perform communication via a wireless and/or wired LAN.

The monitoring data and the first time stamp assigned thereto transmitted from the wireless communication device 23 of the working machine 1 are received by the communicator 43 of the assistant 40. The controller 41 causes the monitoring database 42d of the storing device 42 to store (record) the monitoring data and the first time stamp assigned thereto received by the communicator 43.

The monitoring data stored in the monitoring database 42d and the work data stored in the work database 42a of the storing device 42 are read by the controller 41 in response to a request from the remote control terminal 30, and transmitted to the remote control terminal 30 via the communicator 43. When the monitoring data is transmitted to the remote control terminal 30, the first time stamp assigned to the monitoring data is also transmitted to the remote control terminal 30 via the communicator 43.

The remote control signal transmitted from the remote control terminal 30 is received by the communicator 43 of the assistant 40 and accepted by the signal acceptor 41a. The signal acceptor 41a determines whether the accepted remote control signal is appropriate based on the second time stamp assigned to the accepted remote control signal and the first time stamp assigned to the monitoring data stored in the monitoring database 42d of the storing device 42.

Then, if the signal acceptor 41a determines that the accepted remote control signal is appropriate, the signal acceptor 41a validates the remote control signal by transferring the remote control signal to the wireless communication device 23 of the working machine 1 via the communicator 43. On the contrary, if the signal acceptor 41a determines that the accepted remote control signal is not appropriate, the signal acceptor 41a invalidates the remote control signal by discarding the remote control signal without transferring the remote control signal. The digital filter 41b performs filtering on image data (image signal) included in the monitoring data read from the monitoring database 42d.

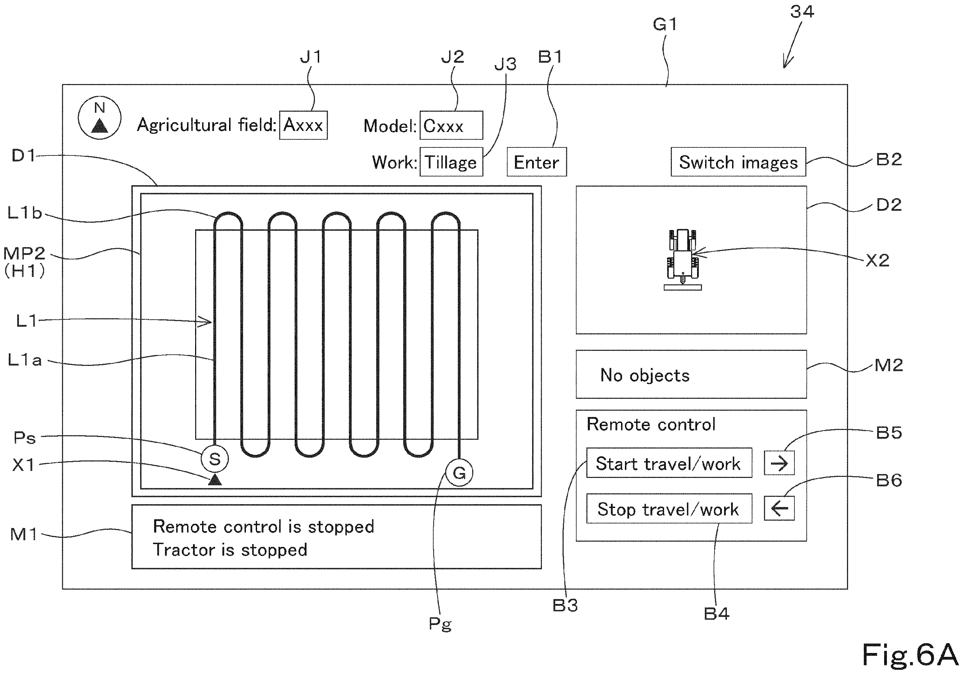

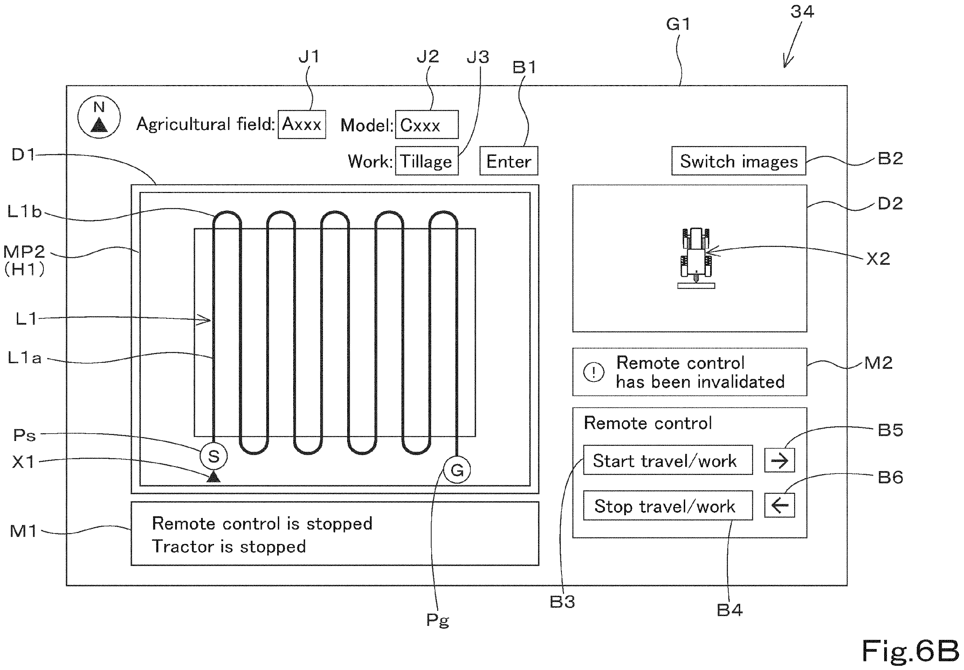

FIGS. 6A and 6B illustrate a remote-monitoring operation screen G1 displayed on the display interface 34 of the remote control terminal 30. For example, when the human operator 60 (FIG. 1B) performs a predetermined operation on the display interface 34, the controller 31 executes (activates) an application program (hereinafter, referred to as a "remote control application") for remote control of the working machine 1, and causes the display interface 34 to display the remote-monitoring operation screen G1 illustrated in FIG. 6A, etc.. The remote-monitoring operation screen G1 includes input fields J1 to J3, operation keys B1 to B6, display fields D1 and D2, and notification fields M1 and M2.

The human operator 60 inputs the name of the agricultural field (identification information of the agricultural field) where agricultural work is performed by the working machine 1 in the agricultural-field input field J1, inputs the model of the working machine 1 (identification information of the working machine) in the machine-type input field J2, inputs the type of the agricultural work (identification information of the work) in the work input field J3, and then touches the enter key B1. In response to this, the controller 31 reads the work data corresponding to the content input in the input fields J1 to J3 from the storing unit 32. If the work data corresponding to the content input in the input fields J1 to J3 is not stored in the storing unit 32, the controller 31 generates a work request signal corresponding to the input content and transmits the work request signal to the assistant 40 via the communicator 33.

At the assistant 40, upon the communicator 43 receiving the work request signal, the controller 41 reads the work data corresponding to the work request signal from the work database 42a (FIG. 5) and transmits the work data to the remote control terminal 30.

When the work data is read from the storing unit 32 or received by the communicator 33, the controller 31 of the remote control terminal 30 causes the remote-monitoring operation screen G1 to display work information indicated by the work data in the work display field D1. Furthermore, in a case that the work data is received by the communicator 33, the controller 31 causes the storing unit 32 to store the work data.

As illustrated in FIG. 6A, etc., the work information displayed in the work display field D1 includes an agricultural field map MP2, a travel route L1, and the like. The agricultural field map MP2 indicates an agricultural field H1 input in the agricultural-field input field J1. The working machine 1 input in the machine-type input field J2 travels along the travel route L1 in the agricultural field H1 when performing the work input in the work input field J3.

The travel route L1 includes straight section(s) L1a, turning section(s) L1b, a start position Ps, and a goal position Pg. The start position Ps is a position at which the working machine 1 starts traveling to perform work. The straight section L1a is a route portion along which the working machine 1 performs the work using the working device 2 while traveling straight. The turning section L1b is a route portion along which the working machine 1 turns from one straight section L1a to the next straight section L1a. When the working machine 1 is turning along the turning section L1b, the work done by the working device 2 is stopped. The goal position Pg is a position at which the working machine 1 ends (stops) the work and travel.

When the enter key B 1 is touched, the controller 31 generates a monitoring request signal to request monitoring data, and transmits the monitoring request signal to the assistant 40 via the communicator 33. At the assistant 40, upon the communicator 43 receiving the monitoring request signal, the controller 41 reads the monitoring data corresponding to the monitoring request signal from the monitoring database 42d (FIG. 5), and transmits the monitoring data to the remote control terminal 30 via the communicator 43. In so doing, the controller 41 reads the latest piece of monitoring data and the first time stamp assigned to this piece of monitoring data from the pieces of monitoring data stored in the monitoring database 42d, and transmits the latest piece of monitoring data and the first time stamp via the communicator 43.

At the remote control terminal 30, upon the communicator 33 receiving the monitoring data, the controller 31 causes the storing unit 32 to store the monitoring data and the first time stamp assigned thereto, and then causes the results of monitoring (monitoring information) indicated by the monitoring data to be displayed in the display fields D2 and D1 and the notification field M2 of the remote-monitoring operation screen G1.

Specifically, of the results of monitoring indicated by the monitoring data, the controller 31 causes an image captured by the camera 25c (FIG. 3) of the monitor 25 to be displayed in the monitoring display field D2 as illustrated in FIG. 6A, etc. Furthermore, the controller 31 causes a message indicating the result of detection of an object by the object detector 25d (FIG. 3) to be displayed in the monitoring notification field M2. Furthermore, the controller 31 causes a symbol X1 indicating the position of the working machine 1 detected by the position detector 24 to be displayed in the work display field D1.

In the examples illustrated in FIGS. 6A and 6B, an image of the surrounding area of the working machine 1 as viewed from above is displayed in the monitoring display field D2. This bird's-eye view image is created by the controller 31 based on the monitoring data. Specifically, the monitoring data includes images of the front, rear, left and right, and/or the like of the working machine 1 captured by a plurality of cameras 25c, and the controller 31 combines the plurality of images with a working machine image X2 stored in advance to create the bird's-eye view image. Each time the human operator 60 touches the image switching key B2, the controller 31 switches the images displayed in the monitoring display field D2 in the order of, for example, the front image, the rear image, the left image, the right image, and the bird's-eye view image of the working machine 1 included in the monitoring data, for example.

In the monitoring notification field M2, as the result of detection of the object, for example, a message indicating the presence or absence of the object in the surrounding area of the working machine 1 is displayed. In FIG. 6A, a message indicating that there are no objects in the surrounding area of the working machine 1 is displayed in the monitoring notification field M2, but the message indicating that there are no objects may not be displayed. When the message indicating the presence of the object is displayed in the monitoring notification field M2, the distance to the object, the size of the object, and/or the like may also be displayed in the monitoring notification field M2. Each time the communicator 33 receives the monitoring data from the assistant 40, the controller 31 causes the results of monitoring indicated by the monitoring data to be displayed in the display fields D2 and D1 and the notification field M2, and updates the content displayed in the display fields D2 and D1 and the notification field M2.

In the action notification field M1, results of detection of the action states of the working machine 1 and/or the like by the state detector 26 (FIG. 3) are displayed. Specifically, for example, the controller 31 transmits an action request signal to the assistant 40 by the communicator 33. The action request signal requests action detection data indicating the results of detection of the action states of the working machine 1 and/or the like. Upon the communicator 43 receiving the action request signal, the controller 41 of the assistant 40 transfers the action request signal to the controller 21 of the working machine 1. Upon the wireless communication device 23 receiving the action request signal, the controller 21 transmits the latest piece of action detection data, which is output from the state detector 26, to the assistant 40 via the wireless communication device 23. Upon the communicator 43 receiving the action detection data, the controller 41 of the assistant 40 transfers the action detection data to the remote control terminal 30. Upon the communicator 33 receiving the action detection data, the controller 31 of the remote control terminal 30 causes the result of detection of the action state of the working machine indicated by the action detection data to be displayed in the action notification field M1.

As the above results of detection of the action states of the working machine 1 and/or the like, for example, a message indicating whether the working machine 1 is traveling (traveling or stopped), whether the working device 2 is working (working or stopped), whether the remote control of the working machine 1 is performed, and/or the like is displayed in the action notification field M1. Each time the communicator 33 receives the action detection data, the controller 31 updates the content displayed in the action notification field M1 by causing the results of detection indicated by the action detection data to be displayed in the action notification field M1.

The travel/work start key B3 and the travel/work stop key B4 are examples of operation keys for remote control of the working machine 1. By touching the travel/work start key B3, the human operator 60 can input an instruction to start work using the working device 2 while the working machine 1 autonomously performs traveling and steering based on the travel route L1. By touching the travel/work stop key B4, the human operator 60 can input an instruction to stop the travel and steering of the working machine 1 based on the travel route L1 and the work done by the working device 2.

By the human operator 60 touching the next key B5 or the back key B6, other operation keys for remote control of the working machine 1 are displayed instead of the operation keys B3 and B4. Examples of the other operation keys include a traveling key to input a traveling instruction for the working machine 1, a stop key to input a stop instruction for the working machine 1, a turning key to input a turning instruction for the working machine 1, a raising/lowering key to input a raising/lowering instruction for the working device 2, a prime mover start key to input a start instruction for the prime mover 4 for warming up of the working machine 1 or the like, and a prime mover stop key to input a stop instruction for the prime mover 4.

The human operator 60 can input an action instruction for the working machine 1 by operating the operation key(s) B2, B3, and/or the like for remote control of the working machine 1 while looking at the work information and the results of monitoring displayed in the display fields D1 and D2 and the notification field M1 of the remote-monitoring operation screen G1.

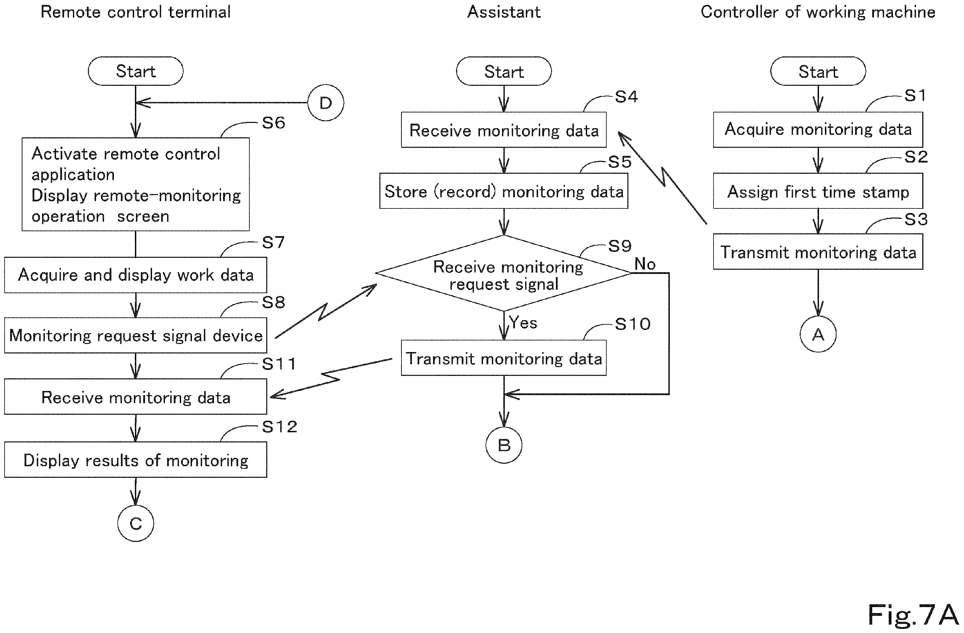

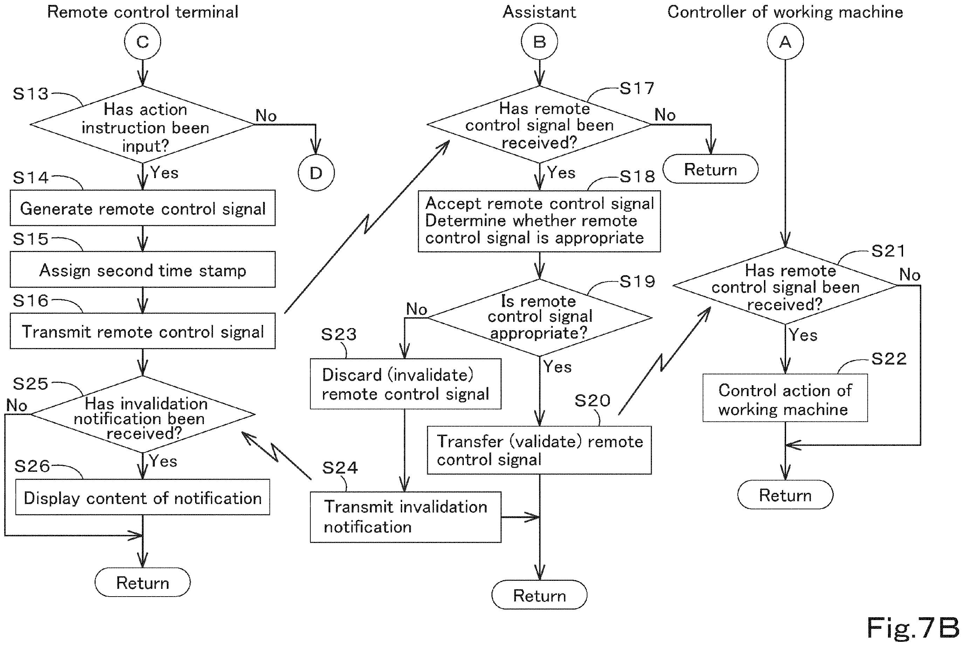

FIGS. 7A and 7B are flowcharts illustrating actions of the controller 21 of the working machine 1, the assistant 40, and the remote control terminal 30 according to an embodiment.

The monitor 25 of the working machine 1 outputs, for example, monitoring data indicating results of monitoring of the surrounding area of the working machine 1 to the controller 21 at a predetermined cycle. Upon acquiring the monitoring data (S1 in FIG. 7A), the controller 21 causes the first assignor 21d to assign a first time stamp to the monitoring data by (S2). In so doing, the first assignor 21d assigns, for example, a first time stamp indicating a current time to the monitoring data. The current time herein is the time at which the controller 21 acquired the monitoring data, the time at which the controller 21 assigns the first time stamp, or the like. The controller 21 transmits the monitoring data, which has assigned thereto the first time stamp, to the assistant 40 via the wireless communication device 23 together with the first time stamp (S3).

Upon the communicator 43 acquiring the monitoring data (S4), the controller 41 of the assistant 40 causes the monitoring database 42d of the storing device 42 to store (record) the monitoring data together with the first time stamp assigned thereto (S5).

While a remote control signal is not received (S21: NO in FIG. 7B), the controller 21 of the working machine 1 repeatedly performs steps S1 to S3 in FIG. 7A described above and step S21. While a remote control signal is not received (S17: NO in FIG. 7B), also, the controller 41 of the assistant 40 repeatedly performs steps S4 and S5 in FIG. 7A described above and steps S9 and S10 and step S17 (described later). Thus, the monitoring data indicating the results of monitoring of the working machine 1 and the surrounding area of the working machine, which is periodically output from the monitor 25, is stored (recorded) constantly in the monitoring database 42d of the assistant 40 together with the first time stamps assigned to the monitoring data, and the monitoring data are accumulated.

The controller 31 of the remote control terminal activates a remote control application to cause the remote-monitoring operation screen G1 to be displayed on the display interface 34 (S6 in FIG. 7A), acquires work data corresponding to the content input in the input fields J1 to J3 from the storing unit 32 or the assistant 40, and causes the content of work indicated by the work data to be displayed on the display interface 34 (S7). The controller 31 transmits a request signal to request the monitoring data to the assistant 40 via the communicator 33 (S8). In so doing, the controller 31 may also transmit a request signal to request action detection data to the assistant 40 via the communicator 33.

Upon the communicator 43 receiving the request signal for the monitoring data (S9: YES), the controller 41 of the assistant 40 reads the latest piece of monitoring data from the monitoring database 42d based on the request signal, and transmits the monitoring data to the remote control terminal 30 via the communicator 43 (S10).

Upon the communicator 33 receiving the monitoring data (S11), the controller 31 of the remote control terminal 30 causes the results of monitoring indicated by the monitoring data to be displayed in the display fields D1 and D2 and the notification field M1 of the remote-monitoring operation screen G1 (S12).

While an action instruction for the working machine 1 is not input (S13: NO in FIG. 7B), the controller 31 repeatedly performs steps S8, S11, and S12 in FIG. 7A described above and step S13. Each time the request signal for the monitoring data is received (S9: YES in FIG. 7A), the controller 41 of the assistant 40 reads the latest piece of monitoring data from the monitoring database 42d, and transmits the latest piece of monitoring data to the remote control terminal 30 (S10). Thus, the results of monitoring of the working machine 1 and the surrounding area of the working machine 1 displayed on the remote-monitoring operation screen G1 of the remote control terminal 30 are updated constantly.

For example, after the working machine 1 moves to the agricultural field where the work is to be performed, the human operator 60 operates the operation key(s) B2, B3 (FIG. 6A, etc.), and/or the like on the remote-monitoring operation screen G1 of the remote control terminal 30 to input the action instruction for the working machine 1. With this, the controller 31 determines that the action instruction for the working machine 1 is input (S13: YES in FIG. 7B), and generates a remote control signal corresponding to the action instruction (S14).

Next, the second assignor 31d assigns a second time stamp to the generated remote control signal (S15). In so doing, the second assignor 31d assigns, for example, a second time stamp indicating a current time to the remote control signal. The current time herein is the time at which the controller 31 generated the remote control signal, the time at which the controller 31 assigns the second time stamp, or the like.

Alternatively, for example, the second assignor 31d refers to the first time stamp assigned to the monitoring data indicating the results of monitoring displayed in the display fields D1 and D2 and the notification field M1 at the point in time at which the operation key B2, B3, and/or the like for remote operation was/were operated, and assigns, to the remote control signal, the second time stamp indicating a second time identical to a first time indicated by the first time stamp. The controller 31 transmits the remote control signal, which has assigned thereto the second time stamp, to the assistant 40 together with the second time stamp via the communicator 33 (S16).

Upon the communicator 43 of the assistant 40 receiving the remote control signal from the remote control terminal 30 (S17: YES), the signal acceptor 41a accepts the remote control signal and determines whether the remote control signal is appropriate (S18). In so doing, the signal acceptor 41a reads a specific piece of monitoring data and the latest piece of monitoring data from the monitoring database 42d. The specific piece of monitoring data is the monitoring data having assigned thereto the first time stamp indicating the first time identical to the second time indicated by the second time stamp assigned to the accepted remote control signal, or the first time earlier than and closest to the second time.

Next, the signal acceptor 41a subjects the read specific piece of monitoring data and the latest piece of monitoring data each to the digital filter 42b, and then compares the specific piece of monitoring data and the latest piece of monitoring data with each other to detect the difference between the pieces of data. By subjecting the specific piece of monitoring data and the latest piece of monitoring data to the digital filter 42b, noise is removed from both pieces of data, so that the difference smaller than a predetermined value can be ignored.

In detecting the difference between the specific piece of monitoring data and the latest piece of monitoring data, the signal acceptor 41a compares pieces of monitoring data which are the same in type as each other to detect a difference. Specifically, the signal acceptor 41a compares pieces of image data obtained by the camera 25c with each other, pieces of detection data obtained by the laser sensor 25a with each other, pieces of detection data obtained by the ultrasonic sensor 25b with each other, and pieces of detection data obtained by the object detector 25d with each other, to detect each difference between the pieces of the data. The signal acceptor 41a may compare pieces of data in at least one of the following combinations to detect the difference: the pieces of image data obtained by the camera 25c; the pieces of detection data obtained by the laser sensor 25a; the pieces of detection data obtained by the ultrasonic sensor 25b; and the pieces of detection data obtained by the object detector 25d.

If there is no delay of a predetermined time or more in the communication between the remote control terminal 30 and the assistant 40, the real-time consistency between the results of monitoring (monitoring data) of the surrounding area of the working machine 1 displayed on the remote control terminal 30 and the remote control signal transmitted from the remote control terminal 30 are guaranteed to some extent. In such a case, for example, while the working machine 1 is stopped, when the remote control signal based on the travel/work start key B3 is transmitted from the remote control terminal 30, the signal acceptor 41a of the assistant 40 accepts the remote control signal and reads the specific piece of monitoring data and the latest piece of monitoring data from the monitoring database 42d. The condition of the surrounding area of the working machine 1 indicated by the read specific piece the monitoring data (that is, the monitoring data displayed on the remote control terminal 30) and the condition of the surrounding area of the working machine 1 indicated by the latest piece of monitoring data are substantially equal to each other. Accordingly, an object not indicated by the specific piece of monitoring data is not indicated by the latest piece of monitoring data.

If there is no delay of a predetermined time or more in the communication between the remote control terminal 30 and the assistant 40, for example, while the working machine 1 is traveling, when the remote control signal based on the turning key to issue a turning instruction for the working machine 1 is transmitted from the remote control terminal 30, the signal acceptor 41a accepts the remote control signal and reads a specific piece of monitoring data and the latest piece of monitoring data from the monitoring database 42d. Also in such cases, the condition of the surrounding area of the working machine 1 indicated by the latest piece of monitoring data does not greatly differ from the condition of the surrounding area of the working machine 1 indicated by the read specific piece of monitoring data, and an object not indicated by the specific piece of monitoring data is not indicated by the latest piece of monitoring data.

That is, if there is no delay of a predetermined time or more in the communication between the remote control terminal 30 and the assistant 40, the difference between the specific piece of monitoring data and the latest piece of monitoring data detected by the signal acceptor 41a, that is, the difference between the pieces of image data obtained by the camera 25c, the pieces of detection data obtained by the laser sensor 25a, the pieces of detection data obtained by the ultrasonic sensor 25b, and the pieces of detection data obtained by the object detector 25d included in both pieces of monitoring data, is small, and the difference does not exceed a predetermined degree (threshold).

Note that, since the condition of the surrounding area of the working machine 1 changes as the working machine 1 travels, the predetermined degree (threshold) with which the signal acceptor 41a compares the difference may be set to a degree larger than the predetermined degree with which the signal acceptor 41a compares the difference while the working machine 1 is stopped. Alternatively, while the working machine 1 is traveling, in the specific piece of monitoring data and the latest piece of monitoring data, the signal acceptor 41a may detect the difference between the pieces of detection data obtained by the laser sensor 25a, the pieces of detection data obtained by the ultrasonic sensor 25b, or the pieces of detection data obtained by the object detector 25d and compare each difference with the predetermined degree, and may not detect the difference between the pieces of image data obtained by the camera 25c and not compare the difference with the predetermined degree.

Furthermore, in a case that the interval(s) at which the monitoring database 42d stores the monitoring data is long and/or the interval(s) at which the remote control terminal 30 receives the monitoring data is short, the specific piece of monitoring data read from the monitoring database 42d by the signal acceptor 41a may be identical to the latest piece of monitoring data. Also in such a case, the difference between the specific piece of monitoring data and the latest piece of monitoring data detected by the signal acceptor 41a does not exceed the predetermined degree.

If the detected difference does not exceed the predetermined degree, the signal acceptor 41a determines that the accepted remote control signal is appropriate (S19: YES), and validates the remote control signal by transferring the remote control signal to the controller 21 of the working machine 1 (S20).

Once the controller 21 of the working machine 1 has received via the wireless communication device 23 the remote control signal (S21: YES), the controller 21 controls the action of the working machine 1 (or the working device 2) using the travel controller 21b or the work controller 21c based on the remote control signal (S22). That is, the controller 21 is allowed to, based on the remote control signal transmitted from the remote control terminal 30, control the action of the working machine 1 or the working device 2, and the working machine 1 or the working device 2 performs the action corresponding to the remote control signal.

If the remote control signal transmitted from the remote control terminal 30 is a remote control signal based on the operation on the travel/work start key B3 (FIG. 6A, etc.), work data is also transmitted from the remote control terminal 30 together with the remote control signal (S16 in FIG. 7B). Then, if the remote control signal is validated by the signal acceptor 41a of the assistant 40 (S20), the wireless communication device 23 of the working machine 1 receives the work data together with the remote control signal (S21: YES). Therefore, the controller 21 controls the action of the working machine 1 or the working device 2 using the travel controller 21b or the work controller 21c based on the accepted remote control signal and the travel route L1 included in the work data, etc., and causes the working device 2 to perform agricultural work on the agricultural field while causing the working machine 1 to automatically travel and to be automatically steered. As another example, the controller 21 may acquire (receive) work data from the assistant 40 at predetermined point(s) in time.

On the contrary, if there is a delay of a predetermined time or more in the communication between the remote control terminal 30 and the assistant 40, the real-time consistency between the results of monitoring (monitoring data) of the surrounding area of the working machine 1 displayed on the remote control terminal 30 and the remote control signal transmitted from the remote control terminal 30 is lost. In such a case, for example, when a remote control signal based on the travel/work start key B3 is transmitted from the remote control terminal 30 while the working machine 1 is stopped, or when a remote control signal based on the turning key is transmitted from the remote control terminal 30 while the working machine 1 is traveling, the signal acceptor 41a accepts the remote control signal and reads a specific piece of monitoring data and the latest piece of monitoring data from the monitoring database 42d. An object (an obstacle, for example, a moving object such as a bird or an animal) that is not indicated by the read specific piece of monitoring data may be indicated by the latest piece of monitoring data. Furthermore, while the working machine 1 is traveling, the condition of the surrounding area of the working machine 1 indicated by the latest piece of monitoring data greatly differs from the condition of the surrounding area of the working machine 1 indicated by the specific piece of monitoring data.

For this reason, if there is a delay of a predetermined time or more in the communication between the remote control terminal 30 and the assistant 40, the difference between the specific piece of monitoring data and the latest piece of monitoring data detected by the signal acceptor 41a is large, and the difference exceeds the predetermined degree (threshold). If the difference exceeds the predetermined degree as described above, the signal acceptor 41a determines that the accepted remote control signal is not appropriate (S19: NO), and invalidates the remote control signal by discarding the remote control signal without transferring the remote control signal to the controller 21 (S23). Then, the signal acceptor 41a transmits an invalidation notification (signal) indicating that the remote control signal has been invalidated to the remote control terminal 30 by the communicator 43 (S24). This prevents the controller 21 from controlling the action of the working machine based on the remote control signal transmitted from the remote control terminal 30.

Once the controller 31 of the remote control terminal 30 has received via the communicator 33 the invalidation notification (S25), the controller 31 displays the content of the invalidation notification in the action notification field M1 (S26). Specifically, the controller 31 displays, in the action notification field M1, a message indicating that a remote control (the input action instruction for the working machine 1) indicated by the invalidation notification has been invalidated, as illustrated in FIG. 6B. Accordingly, the human operator 60 can recognize that the input action instruction for the working machine 1, that is, the remote control, was not performed.

In the above-described embodiment, based on the second time indicated by the second time stamp assigned to the remote control signal and on the first time indicated by the first time stamp assigned to the monitoring data stored in the monitoring database 42d, the signal acceptor 41a of the assistant 40 reads the specific piece of monitoring data and the latest piece of monitoring data from the monitoring database 42d, and determines whether the remote control signal is appropriate based on the difference therebetween. However, the method of determining whether the remote control signal is appropriate is not limited as such, and any of the following determination methods may be used.

For example, the signal acceptor 41a determines whether the remote control signal is appropriate based on the time difference between the second time indicated by the second time stamp assigned to the remote control signal, and the first time indicated by the first time stamp assigned to the latest piece of monitoring data. Specifically, if the time difference between the second time indicated by the second time stamp of the remote control signal and the first time indicated by the first time stamp of the latest piece of monitoring data is less than a predetermined time, the delay time is short, and thus the signal acceptor 41a determines that the remote control signal is appropriate. If the time difference between the second time and the first time is equal to or more than the predetermined time, the delay time is long, and thus the signal acceptor 41a determines that the remote control signal is not appropriate.

Alternatively, the signal acceptor 41a determines whether the remote control signal is appropriate based on the action instruction corresponding to the accepted remote control signal. Specifically, for example, while the working machine 1 is traveling, if the action instruction corresponding to the accepted remote control signal is an instruction to stop traveling of the working machine 1, the signal acceptor 41a determines that the remote control signal is appropriate because the risk is low. If the action instruction corresponding to the accepted remote control signal is an instruction to start the prime mover 4 or an action instruction unrelated to the traveling or work of the working machine 1, the signal acceptor 41a also determines that the remote control signal is appropriate because the risk is low. While the working machine 1 is turning, if the action instruction corresponding to the accepted remote control signal is an instruction to lower the working device 2, the signal acceptor 41a determines that the remote control signal is not appropriate because the risk is high if the working device 2 contacts the ground.

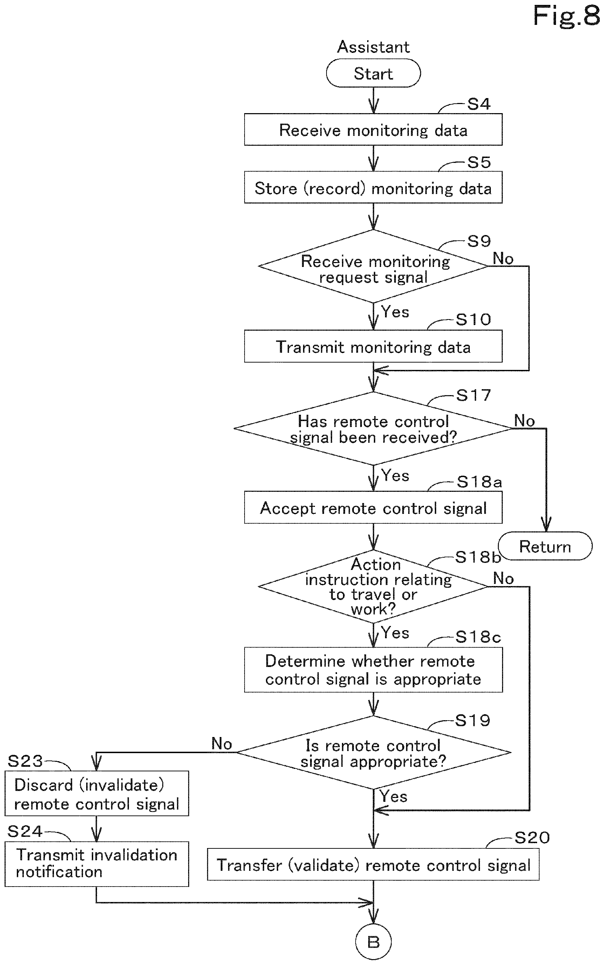

The signal acceptor 41a may also determine whether the remote control signal is appropriate in the manner as illustrated in FIG. 8. FIG. 8 is a flowchart illustrating the actions of the assistant 40 according to another embodiment. In the example in FIG. 8, upon the communicator 43 of the assistant 40 receiving the remote control signal (S 17: YES), the signal acceptor 41a accepts the remote control signal (S18a), and checks whether the action instruction corresponding to the remote control signal is an action instruction relating to the travel of the working machine 1 or the work performed by the working device 2. In so doing, if the action instruction corresponding to the accepted remote control signal is an action instruction relating to the travel of the working machine 1 or the work performed by the working device 2 (S18b: YES), the signal acceptor 41a determines whether the remote control signal is appropriate (S18c).

On the contrary, if the action instruction corresponding to the accepted remote control signal is neither the action instruction relating to the travel of the working machine 1 nor the action instruction relating to the work by the working device 2 (S18b: NO), the signal acceptor 41a validates the remote control signal by transferring the remote control signal to the controller 21 of the working machine 1 (S20) without determining whether the remote control signal is appropriate. The other steps performed by the assistant 40 are the same as those described in FIGS. 7A and 7B.

The output of the monitoring data from the monitor 25, the transmission of the monitoring data and/or the action detection data from the wireless communication device 23, and/or the transmission of the monitoring data and/or the action detection data from the assistant 40 may be performed at a predetermined cycle or may be performed in response to a request from a device that receives the data.

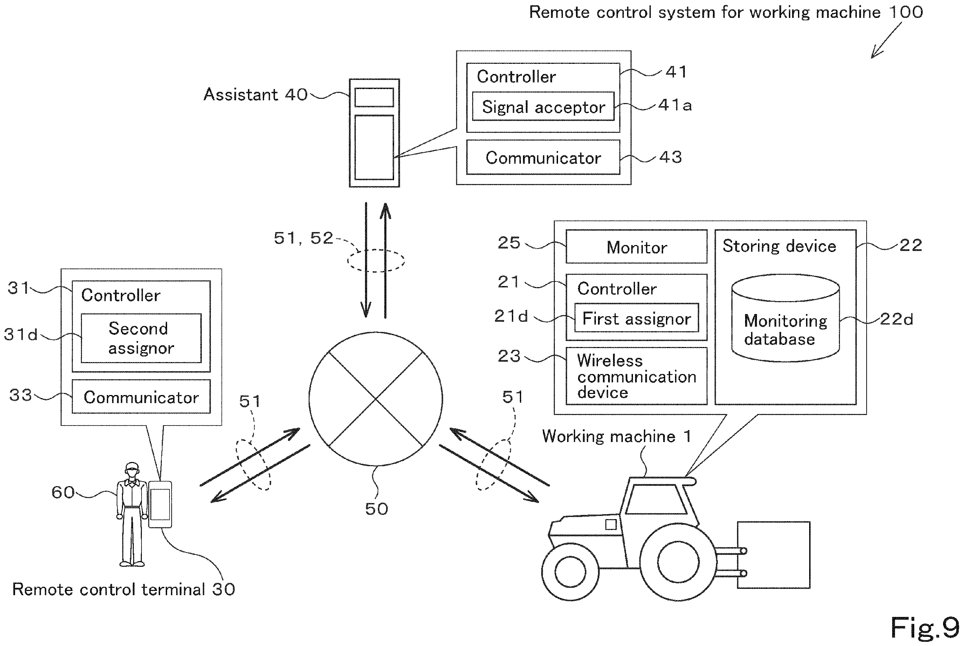

In the above-described embodiment, as illustrated in FIG. 1B, etc., the storing device 42 including the databases 42d and 42a and the signal acceptor 41a are provided in the assistant 40. However, for example, as illustrated in FIGS. 9 to 11, one of the storing device 42 and the signal acceptor 41a may be provided in the working machine 1 (or the working device 2) or both of them may be provided in the working machine 1 (or the working device 2). FIGS. 9 to 11 are block diagrams of the remote control system 100 for a working machine according to other embodiments.

In the remote control system 100 for a working machine illustrated in FIG. 9, a storing device 22 including a monitoring database 22d is provided in the working machine 1. That is, the assistant 40 does not include the monitoring database 22d. The locations of the other elements are the same as those in the embodiment illustrated in FIGS. 1B to 5.

In FIG. 9, the monitoring data output from the monitor 25 of the working machine 1 to the controller 21 is, after the first time stamp is assigned thereto by the first assignor 21d, stored in the monitoring database 22d of the storing device 22 by the controller 21. The remote control terminal 30 transmits a first monitoring request signal to request the monitoring data to the assistant 40 via the communicator 33. The assistant 40 receives the first monitoring request signal via the communicator 43, and transfers the first monitoring request signal to the wireless communication device 23 of the working machine 1. In response to the first monitoring request signal received by the wireless communication device 23, the controller 21 reads monitoring data (the latest piece of monitoring data) from the monitoring database 22d, and transmits the monitoring data to the assistant 40 via the wireless communication device 23. The assistant 40 receives the monitoring data via the communicator 43, and transfers the monitoring data to the remote control terminal 30.

In FIG. 9, once the signal acceptor 41a of the assistant 40 has accepted the remote control signal transmitted from the remote control terminal 30 via the communicator 43, the signal acceptor 41a transmits a second monitoring request signal to request the monitoring data corresponding to the remote control signal to the controller 21 of the working machine 1 via the communicator 43. Once the controller 21 has received via the wireless communication device 23 the second monitoring request signal, the controller 21 reads the monitoring data requested by the second monitoring request signal from the monitoring database 22d. In so doing, the controller 21 reads the specific piece of monitoring data and the latest piece of monitoring data from the monitoring database 22d. The specific piece of monitoring data is the monitoring data which has assigned thereto the first time stamp indicating the first time identical to the second time indicated by the second time stamp assigned to the remote control signal based on which (triggered) the second monitoring request signal was transmitted, or the first time earlier than and closest to the second time. Upon the wireless communication device 23 transmitting these pieces of monitoring data to the assistant 40, the signal acceptor 41a acquires the pieces of monitoring data via the communicator 43. The actions of the other elements are the same as the actions of the elements described in FIGS. 1A to 8.

The work database 42a illustrated in FIG. 5 may be included in the storing device 22 of the working machine 1 instead of being included in the assistant 40 (not illustrated). In such a case, work data in the work database 42a in the storing device 22 is transmitted from the storing device 22 of the working machine 1 to the remote control terminal 30 via the assistant 40 in the same manner as the above-described monitoring data.

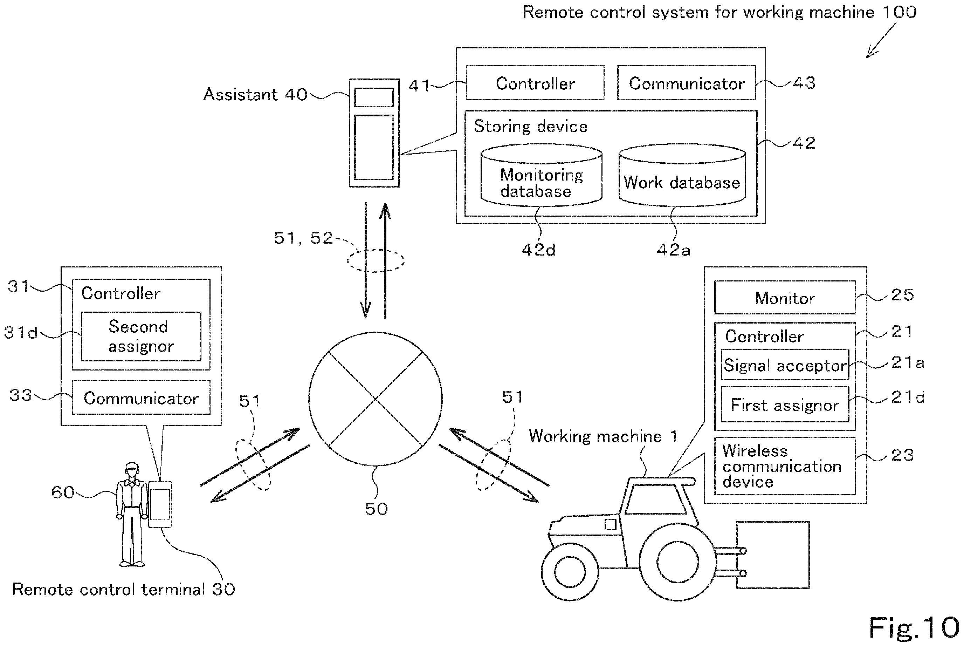

In the remote control system 100 for a working machine illustrated in FIG. 10, the signal acceptor 41a (FIG. 5, etc.,) is not provided in the assistant 40, and a signal acceptor 21a is provided in the working machine 1. The locations of the other elements are the same as those in the embodiment illustrated in FIGS. 1B to 5.

In FIG. 10, the remote control signal transmitted from the remote control terminal 30 is received by the wireless communication device 23 of the working machine 1 via the communicator 43 of the assistant 40, and is accepted by the signal acceptor 21a. Then, the signal acceptor 21a transmits the second monitoring request signal to request the monitoring data corresponding to the accepted remote control signal to the assistant 40 via the wireless communication device 23. Once the controller 41 of the assistant 40 has received via the communicator 43 the second monitoring request signal, the controller 41 reads the monitoring data requested by the second monitoring request signal from the monitoring database 42d of the storing device 42. In so doing, the controller 41 reads the specific piece of monitoring data and the latest piece of monitoring data from the monitoring database 42d. The specific piece of monitoring data is the monitoring data which has assigned thereto the first time stamp indicating the first time identical to the second time indicated by the second time stamp assigned to the remote control signal based on which the second monitoring request signal was transmitted, or the first time earlier than and closest to the second time. Then, the communicator 43 transmits these pieces of monitoring data to the wireless communication device 23, and the signal acceptor 21a acquires (receives) these pieces of monitoring data via the wireless communication device 23.

Upon acquiring the specific piece of monitoring data and the latest piece of monitoring data as described above, the signal acceptor 21a detects the difference between the specific piece of monitoring data and the latest piece of monitoring data, determines whether the remote control signal is appropriate based on the difference, and validates or invalidates the remote control signal according to the determination result, similarly to the signal acceptor 41a (FIG. 5, etc.) The controller 21 controls actions of the working machine 1 and/or the working device 2 using the travel controller 21b and/or the work controller 21c based on the remote control signal validated (determined to be appropriate) by the signal acceptor 21a. The actions of the other elements are the same as those of the elements described in FIGS. 1A to 8.

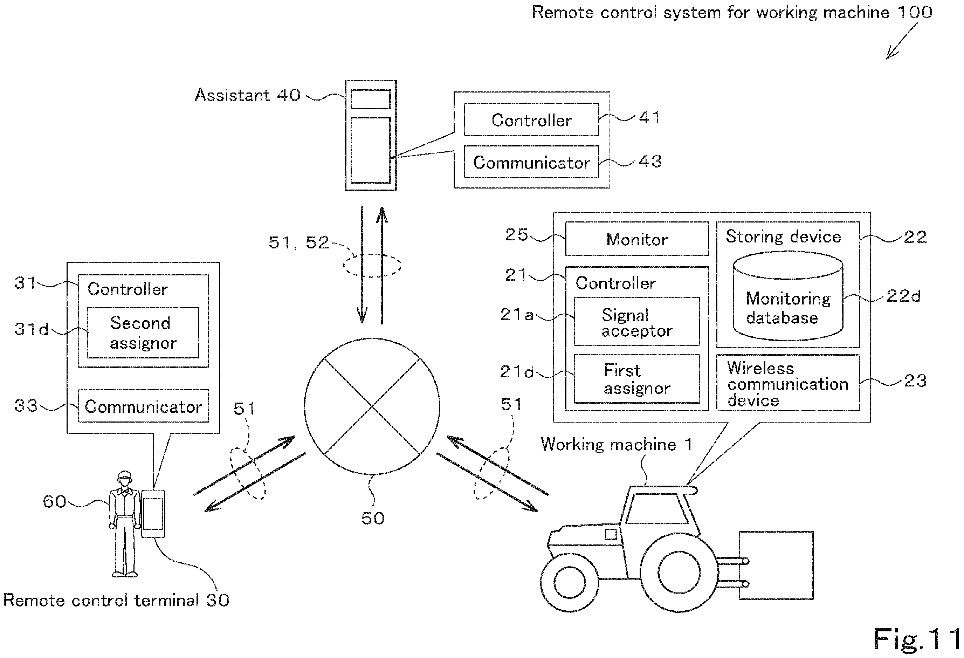

In the remote control system 100 for a working machine illustrated in FIG. 11, the storing device 22 and the signal acceptor 21a are provided in the working machine 1. The locations of the other elements are the same as those in the embodiment illustrated in FIGS. 1B to 5. In FIG. 11, the assistant 40 relays the first monitoring request signal, the monitoring data, the remote control signal, and the like between the wireless communication device 23 of the working machine 1 and the remote control terminal 30. The communicator 43 of the assistant 40 performs wireless and/or wired communication with the wireless communication device 23 of the working machine 1 and the communicator 33 of the remote control terminal 30 via the mobile telephone network 51, the land-line telephone network 52, or a local area network (LAN) 53, and the Internet 50. The actions of the other elements are the same as those of the elements described with reference to FIGS. 1A to 8 or 9.

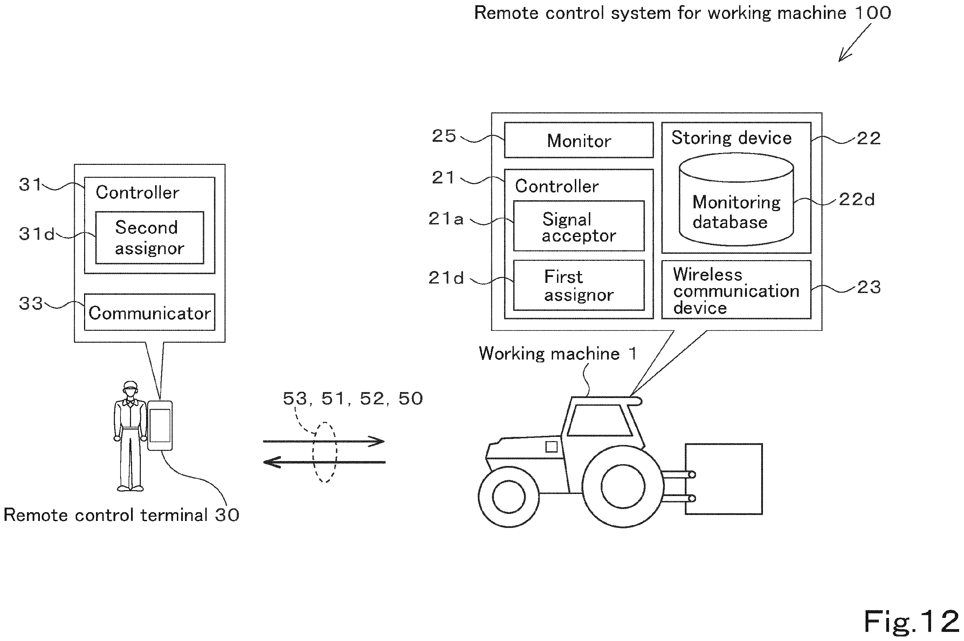

In the above-described embodiments, the assistant 40 is included in the remote control system 100 for a working machine, but the assistant may be omitted as in the remote control system 100 for a working machine according to another embodiment illustrated in FIG. 12. In the remote control system 100 for a working machine illustrated in FIG. 12, the wireless communication device 23 of the working machine 1 and the remote control terminal 30 perform wireless communication via the LAN 53, the mobile telephone network 51, the land-line telephone network 52, the Internet 50, and/or the like. The working machine 1 includes the storing device 22 and the signal acceptor 21a.

In FIG. 12, the remote control terminal 30 transmits the monitoring request signal to request the monitoring data to the wireless communication device 23 of the working machine 1 via the communicator 33. Once the controller 21 of the working machine 1 has received via the wireless communication device 23 the monitoring request signal, reads monitoring data from the monitoring database 22d of the storing device 22, and transmits the monitoring data to the remote control terminal 30 via the wireless communication device 23. The work data stored in a work database 22a is also transmitted from the wireless communication device 23 to the remote control terminal 30 in the same manner as the monitoring data.

The remote control terminal 30 transmits the remote control signal to the wireless communication device 23 via the communicator 33. Upon the wireless communication device 23 receiving the remote control signal, the signal acceptor 21a accepts the remote control signal, and reads the specific piece of monitoring data and the latest piece of monitoring data from the monitoring database 22d. The specific piece of monitoring data is the monitoring data which has assigned thereto the first time stamp indicating the first time identical to the second time indicated by the second time stamp assigned to the remote control signal, or the first time earlier than and closest to the second time. Then, the signal acceptor 21a determines whether the accepted remote control signal is appropriate based on the difference between the specific piece of monitoring data and the latest piece of monitoring data, and validates or invalidates the remote control signal according to the determination result. The actions of the other elements are the same as those of the elements described with reference to FIGS. 1A to 8, 9, or 10.

As another embodiment, the wireless communication device 23 of the working machine 1 and the remote control terminal 30 may directly communicate the monitoring data and the remote operation command using, for example, a short-range wireless signal such as an infrared signal, a BLU (Bluetooth (registered trademark) Low Energy) signal, or an UHF (ultra high frequency) signal, without using networks. In such a case, it is only necessary that the wireless communication device 23 and the remote control terminal 30 each include an interface for short-range wireless communication and that the other features be the same as those illustrated in FIG. 12.

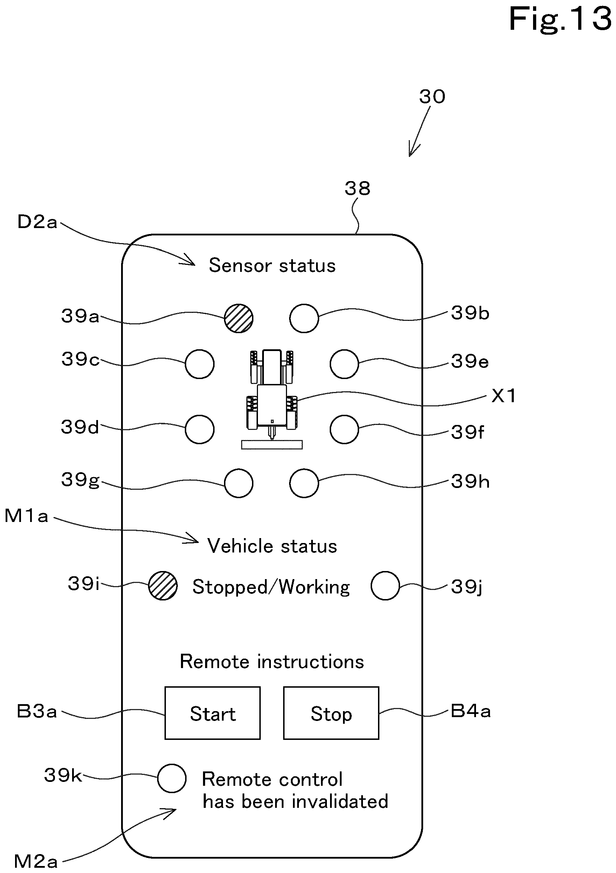

The above-described embodiments illustrate examples in which the monitoring data transmitted to the remote control terminal 30 includes the image data of the surrounding area of the working machine 1 captured by the camera 25c. However, for example, the camera 25c may be omitted, and, as the monitoring data, data indicating the conditions of the surrounding area of the working machine 1 and the like detected by sensor(s) and the object detector 25d may be transmitted from the wireless communication device 23 of the working machine 1 or the assistant 40 to the remote control terminal 30. In this case, for example, a display 38 as illustrated in FIG. 13 may be provided in the remote control terminal 30.

The display 38 illustrated in FIG. 13 may be, for example, a screen displayed on a touchscreen, or may be provided on the surface of the remote control terminal 30 using processing such as printing and molding. In the latter case, printed characters and indicator lamps 39a to 39k (circles illustrated in FIG. 13) may constitute a display field D2a and notification fields M1a and M2a, and push operation keys B3a and B4a may be provided. The indicator lamps 39a to 39k LEDs and/or the like.

For example, if an object is detected in the surrounding area of the working machine 1 and the working device 2 by the laser sensor 25a or the ultrasonic sensor 25b and by the object detector 25d, the controller 31 of the remote control terminal 30, which has received the monitoring data including the detection results, turns on at least one of the indicator lamps 39a to 39h in the display field D2a corresponding to the direction in which the object is present (the state indicated by hatching). Furthermore, as a notification indicating whether the working machine 1 and the working device 2 are stopped or working as a vehicle state, the controller 31 turns on the respective corresponding indicator lamps 39i and 39j in the notification field M1a. Furthermore, as a notification indicating that the remote control signal has been invalidated, the controller 31 turns on the corresponding indicator lamp 39k in the notification field M2a. The travel/work start key B3a is operated in order to input an instruction to start the work by the working device 2 while the working machine 1 automatically performs traveling and steering based on the travel route L1. The travel/work stop key B4a is operated in order to input an instruction to stop the work done by the working device 2 while the working machine 1 automatically performs traveling and steering based on the travel route L1.

In the above-described embodiments, the remote control signal determined to be not appropriate by the signal acceptor 41a is invalidated by discarding the remote control signal without transferring the remote control signal to the controller 21. However, the invalidation method is not limited as such. For example, the remote control signal determined to be not appropriate by the signal acceptor 41a may be returned together with an error message to the remote control terminal 30 instead of the controller 21. In a case that the signal acceptor 21a is provided in the working machine 1, for example, if it is determined that the remote control signal accepted by the signal acceptor 21a is not appropriate, the remote control signal may be invalidated by turning on a flag (referred to as a "remote control prohibition flag") to prohibit the action control of the working machine 1 (or the working device 2) based on the remote control signal in a predetermined storage area of the storing unit 21e (FIG. 3) of the controller 21. In such a case, when the remote control prohibition flag is ON, the controller 21 does not perform the action control of the working machine 1 and the like based on the remote control signal received by the wireless communication device 23. Furthermore, the signal acceptor 21a may turn off the remote control prohibition flag when a predetermined time has elapsed since the remote control prohibition flag was turned on or when the next remote control signal is accepted.

In the above-described embodiments, the monitor 25 is provided in the working machine 1. However, alternatively, for example, a monitor that monitors the working machine 1 and the surrounding area of the working machine 1 may be provided in a site (agricultural field or the like) where the working machine 1 performs work. In such a case, for example, a communicator that performs wireless communication may be provided in the monitor, and monitoring data indicating the results of monitoring obtained by the monitor may be transmitted to the wireless communication device 23 of the working machine 1, the remote control terminal 30, and/or the assistant 40 via the communicator.

The above-described embodiments illustrate examples in which the wireless communication device 23 of the working machine 1, the communicator 33 of the remote control terminal 30, or the communicator 43 of the assistant 40 communicate with each other via the mobile telephone network 51, the land-line telephone network 52, the Internet 50, and/or the LAN 53. However, the communication networks are not limited as such. For example, the wireless communication device 23 and the communicator 33, 43 may communicate with each other via a wide area network and/or a narrow area network such as a WAN (world area network), a MAN (metropolitan area network), a VPN (virtual private network), an Ethernet, or an intranet, and/or a public communication network. Alternatively, the wireless communication device 23 and the communicator 33, 43 may communicate with each other via the combination of the above-described communication network and another communication network.

The remote control system 100 for a working machine according to one or more embodiments described above includes the following features and achieves the following effects.

A remote control system 100 for a working machine according to one or more embodiments includes a monitor 25 to monitor a surrounding area of a working machine 1 which is allowed to travel, and output a piece of monitoring data indicating a result of monitoring the surrounding area, a first assignor 21d to assign a first time stamp to the piece of monitoring data, a storage and/or a memory 42, 22 to store a plurality of the pieces of monitoring data together with a plurality of the first time stamps assigned to the plurality of pieces of monitoring data, a remote control terminal 30 to receive the piece of monitoring data and display the result of monitoring indicated by the piece of monitoring data and to be operated to transmit a remote control signal to remotely control the working machine 1, a second assignor 31d to assign a second time stamp to the remote control signal when the remote control signal is transmitted from the remote control terminal 30, a signal acceptor 41a, 21a to accept the remote control signal transmitted from the remote control terminal 30, and a controller 21 to control an action of the working machine 1, wherein the signal acceptor 41a, 21a determines whether the accepted remote control signal is appropriate based on the second time stamp assigned to the accepted remote control signal and the first time stamp assigned to the piece of monitoring data stored in the storage and/or the memory 42, 22, and invalidates the remote control signal determined to be not appropriate, and the controller 21 controls the action of the working machine 1 based on the remote control signal determined to be appropriate by the signal acceptor 41a, 21a.

With the above configuration, even if a communication delay occurs during the remote control of the working machine 1 by the remote control terminal 30, the signal acceptor 41a, 21a accepts the remote control signal and determines whether the remote control signal is appropriate based on the second time stamp of the remote control signal and the first time stamp of the monitoring data in the storage and/or the memory 42, 22. The signal acceptor 41a, 21a then invalidates the remote control signal determined to be not appropriate. This makes it possible to eliminate or reduce the likelihood that the working machine 1 will uselessly (meaninglessly) operate based on an inappropriate remote control signal resulting from the communication delay. Furthermore, for example, if an obstacle (object) not indicated by the monitoring data displayed on the remote control terminal 30 appears actually in the surrounding area of the working machine 1, since an inappropriate remote control signal resulting from a communication delay is invalidated, it is possible to eliminate or reduce the likelihood that the working machine 1 will collide with the obstacle by operating based on the remote control signal. This makes it possible to perform risk hedging even if a communication delay occurs during the remote control of the working machine 1. Furthermore, since the controller 21 controls the action of the working machine 1 based on the remote control signal determined to be appropriate by the signal acceptor 41a, 21a, it is possible to achieve effective and stable operation of the working machine 1.

In one or more embodiments, the signal acceptor 41a, 21a acquires, from the storage and/or the memory 42, 22, a specific piece of monitoring data and a latest piece of monitoring data, the specific piece of monitoring data being one of the plurality of pieces of monitoring data that has assigned thereto the first time stamp indicating a first time identical to a second time indicated by the second time stamp assigned to the accepted remote control signal or a first time earlier than and closest to the second time, and detects a difference between the specific piece of monitoring data and the latest piece of monitoring data, if the difference does not exceed a predetermined degree, determines that the accepted remote control signal is appropriate, transfers the remote control signal to the controller 21, and allows the controller 21 to control the action of the working machine 1 based on the remote control signal, and if the difference exceeds the predetermined degree, determines that the accepted remote control signal is not appropriate, invalidates the remote control signal, and prevents the controller 21 from controlling the action of the working machine 1 based on the remote control signal.

This achieves the following. During the remote control of the working machine 1 by the remote control terminal 30, if a communication delay occurs and an obstacle (object) not indicated by the specific piece of monitoring data equivalent to the monitoring data displayed on the remote control terminal 30 is indicated by the latest piece of monitoring data stored in the storage and/or memory 22, i.e., if an obstacle is present in the surrounding area of the actual working machine 1, the difference between the specific piece of monitoring data equivalent to the monitoring data displayed on the remote control terminal 30 and the latest piece of monitoring data exceeds the predetermined degree. Since the signal acceptor 41a, 21a determines that the accepted remote control signal is not appropriate and invalidates the remote control signal, it is possible to eliminate or reduce the likelihood that the working machine 1 (or the working device 2) will collide with the obstacle by operating (traveling, starting work, etc.) based on the remote control signal. Furthermore, also when the condition of the surrounding area of the working machine indicated by the latest piece of monitoring data greatly differs from the condition of the surrounding area of the working machine indicated by the specific piece of monitoring data, the difference between the specific piece of monitoring data and the latest piece of monitoring data exceeds the predetermined degree, and the signal acceptor 41a, 21a invalidates the accepted remote control signal. This makes it possible to eliminate or reduce the likelihood that the working machine 1 will uselessly operate based on the remote control signal.

In one or more embodiments, upon each acquisition of a piece of monitoring data from the monitor 25, the first assignor 21d assigns the first time stamp indicating a current time to the piece of monitoring data. With this, it is possible to manage all the pieces of monitoring data outputted from the monitor 25 using the first time stamps each including unique time information.

In one or more embodiments, when the remote control terminal 30 transmits the remote control signal, the second assignor 31d assigns the second time stamp indicating a current time to the remote control signal. With this, it is possible to manage all remote control signals transmitted from the remote control signals using the second time stamps each including unique time information. It is also possible to easily read, from the storage and/or the memory 42, 22, the monitoring data which has assigned thereto the first time stamp equivalent to the sending time of the remote control signal.

In one or more embodiments, the remote control terminal 30 includes a display (display interface) 34 and is operable to acquire a latest one of the plurality of pieces of monitoring data from the storage and/or the memory 42, 22 and display the result of monitoring indicated by the acquired piece of monitoring data on the display 34. The second assignor 31d refers to the first time stamp assigned to the piece of monitoring data indicating the result of monitoring displayed on the display 34 when the remote control terminal 30 is operated, and assigns the second time stamp indicating a second time identical to a first time indicated by the first time stamp to the remote control signal. With this, it is possible to manage all remote control signals transmitted from the remote control signals using the second time stamps each including time information. It is also possible for the signal acceptor 41a, 21a to reliably acquire, from the storage and/or the memory 42, 22, the specific piece of monitoring data equivalent to the monitoring data displayed on the display 34 when the human operator 60 operates the remote control terminal 30.

In one or more embodiments, if the signal acceptor 41a, 21a determines that the accepted remote control signal is appropriate, the signal acceptor 41a, 21a validates the remote control signal by transferring the remote control signal to the controller 21. If the signal acceptor 41a, 21a determines that the accepted remote control signal is not appropriate, the signal acceptor 41a, 21a invalidates the remote control signal by discarding the remote control signal without transferring the remote control signal to the controller 21. With this, even if a communication delay occurs during the remote control of the working machine 1 by the remote control terminal 30, the controller 21 can control the action of the working machine 1 based on an appropriate remote control signal. It is also possible to prevent the controller 21 from controlling the action of the working machine 1 based on an inappropriate remote control signal.

In one or more embodiments, the signal acceptor 41a, 21a provides a notification indicating that the remote control signal has been invalidated to the remote control terminal 30. The remote control terminal 30 includes a display (display interface) 34 and is operable to, upon receipt of the notification from the signal acceptor 41a, 21a, cause the display 34 to display content of the notification. This allows the human operator 60 to, by looking at the display 34 of the remote control terminal 30, easily understand that the remote control signal corresponding to the inputted action instruction for the working machine 1 was invalidated and the action was not performed by the working machine 1.

In one or more embodiments, the remote control terminal 30 includes a manual operator (display interface) 34 to be operated by a human operator 60, and generates the remote control signal corresponding to an action instruction for the working machine 1 inputted by operating the manual operator 34. The signal acceptor 41a, 21a determines whether the remote control signal is appropriate based on the action instruction corresponding to the accepted remote control signal. With this, since not all accepted remote control signals are determined by the signal acceptor 41a, 21a as to whether it is appropriate, it is possible to reduce the processing load on the signal acceptor 41a, 21a, and it is possible for the controller 21 to quickly perform the action control of the working machine 1 based on the remote control signal corresponding to the specific action instruction.

In one or more embodiments, the remote control terminal 30 includes a manual operator (display interface) 34 to be operated by a human operator 60, and generates the remote control signal corresponding to an action instruction for the working machine inputted by operating the manual operator 34. The signal acceptor 41a, 21a determines whether the remote control signal is appropriate if the action instruction corresponding to the accepted remote control signal is an action instruction relating to travel of the working machine 1 or work performed by a working device 2 coupled to the working machine 1. With this, remote control signals corresponding to action instructions relating to travel or work of the working machine 1, involving a risk resulting from a communication delay, are determined by the signal acceptor 41a, 21a as to whether it is appropriate and validated or invalidated, making it is possible to perform risk hedging. On the contrary, remote control signals corresponding to other action instructions for the working machine 1, not involving a risk resulting from a communication delay, are not determined by the signal acceptor 41a, 21a as to whether it is appropriate, making it possible to reduce the processing load on the signal acceptor 41a, 21a, and possible for the controller 21 to quickly perform the action control of the working machine 1 based on the remote control signal.

In embodiments in FIGS. 1A to 8, the remote control system further includes a communication device (wireless communication device) 23 provided in or on the working machine 1 to perform wireless communication, and an assistant 40 provided somewhere other than the working machine 1 and other than the remote control terminal 30. The remote control terminal 30 includes a first communicator (communicator) 33 to perform communication. The assistant 40 includes a second communicator (communicator) 43 to perform communication with the communication device 23 and the first communicator 33. The monitor 25 and the first assignor 21d are provided in or on the working machine 1. The second assignor 31d is provided in or on the remote control terminal 30. The storage and/or the memory 42 and the signal acceptor 41a are provided in or on the assistant 40. With this, it is possible to assign a first time stamp to the monitoring data outputted from the monitor 25 of the working machine 1 and then store the monitoring data in the storage and/or memory 42 of the assistant 40. This also achieves the following. The signal acceptor 41a of the assistant 40 accepts the remote control signal from the remote control terminal 30 and determines whether the remote control signal is appropriate, and then the remote control signal which is appropriate is transmitted to the controller 21 of the working machine 1, making it possible to invalidate inappropriate remote control signals.

In embodiments in FIGS. 9 to 11, the remote control system further includes a communication device (wireless communication device) 23 provided in or on the working machine 1 to perform wireless communication, and an assistant 40 provided somewhere other than the working machine 1 and other than the remote control terminal 30. The remote control terminal 30 includes a first communicator (communicator) 33 to perform communication. The assistant 40 includes a second communicator 43 to perform communication with the communication device 23 and the first communicator 33. The monitor 25 and the first assignor 21d are provided in or on the working machine 1. The second assignor 31d is provided in or on the remote control terminal 30. The storage and/or the memory 22, 42 and the signal acceptor 21a, 41a are provided in or on the working machine 1 and/or the assistant 40. With this, it is possible to assign a first time stamp to the monitoring data outputted from the monitor 25 of the working machine 1 and then store the monitoring data in the storage and/or memory 42 of the assistant 40 or the storage and/or memory 22 of the working machine 1. This also achieves the following. The signal acceptor 41a of the assistant 40 or the signal acceptor 21a of the working machine 1 accepts the remote control signal from the remote control terminal 30 and determines whether the remote control signal is appropriate, and then the remote control signal which is appropriate is transmitted to the controller 21, making it possible to invalidate inappropriate remote control signals.

In embodiments in FIGS. 9 to 11, the communication device 23 performs wireless communication via a mobile telephone network 51, a wide area network (Internet) 50, and/or a narrow area network (LAN) 53. The first communicator 33 and the second communicator 43 perform wireless and/or wired communication via a mobile telephone network 51, a land-line telephone network 52, a wide area network 50, and/or a narrow area network 53. With this, even if a delay occurs in the communication between any of the communication device 23 of the working machine 1, the assistant 40, and the remote control terminal 30 due to a communication failure in the mobile telephone network 51, the land-line telephone network 52, the wide area network 50, and/or the narrow area network 53 during the remote control of the working machine 1, it is possible to hedge the risk resulting from the communication delay.

In embodiments in FIG. 12, the remote control system further includes a communication device (wireless communication device) 23 provided in or on the working machine 1 to perform wireless communication. The remote control terminal 30 includes a first communicator 33 to perform communication. The monitor 25, the first assignor 21d, the storage and/or the memory 22, and the signal acceptor 21a are provided in or on the working machine 1. The second assignor 31d is provided in or on the remote control terminal 30. With this, it is possible to assign a first time stamp to the monitoring data outputted from the monitor 25 of the working machine 1 and then store the monitoring data in the storage and/or memory 22. This also achieves the following. The signal acceptor 21a of the working machine 1 accepts the remote control signal from the remote control terminal 30 and determines whether the remote control signal is appropriate, and the controller 21 quickly performs the action control of the working machine 1 based on the appropriate remote control signal. It is also possible for the signal acceptor 21a to invalidate an inappropriate remote control signal to avoid risks caused by the inappropriate remote control signal.

In embodiments in FIG. 12, the communication device (wireless communication device) 23 performs wireless communication via a mobile telephone network 51, a wide area network 50, and/or a narrow area network 53. The first communicator 33 performs wireless and/or wired communication via a mobile telephone network 51, a land-line telephone network 52, a wide area network 50, and/or a narrow area network 53. With this, even if a delay occurs in the communication between the communication device 23 of the working machine 1 and the remote control terminal 30 due to a communication failure in the mobile telephone network 51, the land-line telephone network 52, the wide area network 50, and/or the narrow area network 53 during the remote control of the working machine 1, it is possible to hedge the risk resulting from the communication delay.

In one or more embodiments, the wide area network 50 includes the Internet. The narrow area network 53 includes a local area network. With this, even if a delay occurs in the communication between the communication device 23 of the working machine 1, the assistant 40, or the remote control terminal 30 due to a communication failure in the Internet or a local area network during the remote control of the working machine 1, it is possible to hedge the risk resulting from the communication delay.

In one or more embodiments, the working machine 1 includes an agricultural machine to perform agricultural work in an agricultural field. The monitor 25 is provided in or on the agricultural machine and includes a camera 25c and/or a sensor 25a, 25b to detect an object in the surrounding area of the agricultural machine. The monitoring data includes image data of the surrounding area of the agricultural machine captured by the camera 25c and/or detection data indicating a result of detection by the sensor. With this, it is possible to monitor the condition of the surrounding area of the working machine 1 (which is an agricultural machine) or objects in the surrounding area using the camera 25c or the sensor 25a, 25b and cause the remote control terminal 30 to display the result of monitoring. This allows the human operator 60 who operates the remote control terminal 30 to easily know the condition of the surrounding area of the working machine 1 and easily perform the remote control of the working machine 1. Furthermore, even if a communication delay occurs during the remote control of the working machine 1 (which is an agricultural machine), it is possible to perform risk hedging.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working machine (agricultural machine)
- 2: working device
- 21: controller
- 21a, 41a: signal acceptor
- 21d: first assignor
- 22, 42: storing device
- 23: wireless communication device (communication device)
- 25: monitor
- 25a: laser sensor (sensor)
- 25b: ultrasonic sensor (sensor)
- 25c: camera
- 30: remote control terminal
- 31d: second assignor
- 33: communicator (first communicator)
- 34: display interface (display, manual operator)
- 38: display
- 40: assistant
- 43: communicator (second communicator)
- 50: Internet (wide area network)
- 51: mobile telephone network
- 52: land-line telephone network
- 53: LAN (narrow area network)
- 60: operator
- 100: remote control system for working machine

## Claims

1. A remote control system for a working machine, the remote control system comprising:
a monitor to monitor a surrounding area of a working machine which is allowed to travel, and output a piece of monitoring data indicating a result of monitoring the surrounding area;
a first assignor to assign a first time stamp to the piece of monitoring data;
a storage and/or a memory to store a plurality of the pieces of monitoring data together with a plurality of the first time stamps assigned to the plurality of pieces of monitoring data;
a remote control terminal to receive the piece of monitoring data and display the result of monitoring indicated by the piece of monitoring data and to be operated to transmit a remote control signal to remotely control the working machine;
a second assignor to assign a second time stamp to the remote control signal when the remote control signal is transmitted from the remote control terminal;
a signal acceptor to accept the remote control signal transmitted from the remote control terminal; and
a controller to control an action of the working machine; wherein
the signal acceptor determines whether the accepted remote control signal is appropriate based on the second time stamp assigned to the accepted remote control signal and the first time stamp assigned to the piece of monitoring data stored in the storage and/or the memory, and invalidates the remote control signal determined to be not appropriate; and
the controller controls the action of the working machine based on the remote control signal determined to be appropriate by the signal acceptor.

2. The remote control system according to claim 1, wherein the signal acceptor:
acquires, from the storage and/or the memory, a specific piece of monitoring data and a latest piece of monitoring data, the specific piece of monitoring data being one of the plurality of pieces of monitoring data that has assigned thereto the first time stamp indicating a first time identical to a second time indicated by the second time stamp assigned to the accepted remote control signal or a first time earlier than and closest to the second time, and detects a difference between the specific piece of monitoring data and the latest piece of monitoring data;
if the difference does not exceed a predetermined degree, determines that the accepted remote control signal is appropriate, transfers the remote control signal to the controller, and allows the controller to control the action of the working machine based on the remote control signal; and
if the difference exceeds the predetermined degree, determines that the accepted remote control signal is not appropriate, invalidates the remote control signal, and prevents the controller from controlling the action of the working machine based on the remote control signal.

3. The remote control system according to claim 1 or 2, wherein, upon each acquisition of a piece of monitoring data from the monitor, the first assignor assigns the first time stamp indicating a current time to the piece of monitoring data.

4. The remote control system according to any one of claims 1 to 3, wherein, when the remote control terminal transmits the remote control signal, the second assignor assigns the second time stamp indicating a current time to the remote control signal.

5. The remote control system according to any one of claims 1 to 3, wherein
the remote control terminal includes a display and is operable to acquire a latest one of the plurality of pieces of monitoring data from the storage and/or the memory and display the result of monitoring indicated by the acquired piece of monitoring data on the display; and
the second assignor refers to the first time stamp assigned to the piece of monitoring data indicating the result of monitoring displayed on the display when the remote control terminal is operated, and assigns the second time stamp indicating a second time identical to a first time indicated by the first time stamp to the remote control signal.

6. The remote control system according to any one of claims 1 to 5, wherein
if the signal acceptor determines that the accepted remote control signal is appropriate, the signal acceptor validates the remote control signal by transferring the remote control signal to the controller; and
if the signal acceptor determines that the accepted remote control signal is not appropriate, the signal acceptor invalidates the remote control signal by discarding the remote control signal without transferring the remote control signal to the controller.

7. The remote control system according to any one of claims 1 to 6, wherein
the signal acceptor provides a notification indicating that the remote control signal has been invalidated to the remote control terminal; and
the remote control terminal includes a display and is operable to, upon receipt of the notification from the signal acceptor, cause the display to display content of the notification.

8. The remote control system according to any one of claims 1 to 7, wherein
the remote control terminal includes a manual operator to be operated by a human operator, and generates the remote control signal corresponding to an action instruction for the working machine inputted by operating the manual operator; and
the signal acceptor determines whether the remote control signal is appropriate based on the action instruction corresponding to the accepted remote control signal.

9. The remote control system according to any one of claims 1 to 7, wherein
the remote control terminal includes a manual operator to be operated by a human operator, and generates the remote control signal corresponding to an action instruction for the working machine inputted by operating the manual operator; and
the signal acceptor determines whether the remote control signal is appropriate if the action instruction corresponding to the accepted remote control signal is an action instruction relating to travel of the working machine or work performed by a working device coupled to the working machine.

10. The remote control system according to any one of claims 1 to 9, further comprising:
a communication device provided in or on the working machine to perform wireless communication; and
an assistant provided somewhere other than the working machine and other than the remote control terminal; wherein
the remote control terminal includes a first communicator to perform communication;
the assistant includes a second communicator to perform communication with the communication device and the first communicator;
the monitor and the first assignor are provided in or on the working machine;
the second assignor is provided in or on the remote control terminal; and
the storage and/or the memory and the signal acceptor are provided in or on the assistant.

11. The remote control system according to any one of claims 1 to 9, further comprising:
a communication device provided in or on the working machine to perform wireless communication; and
an assistant provided somewhere other than the working machine and other than the remote control terminal; wherein
the remote control terminal includes a first communicator to perform communication;
the assistant includes a second communicator to perform communication with the communication device and the first communicator;
the monitor and the first assignor are provided in or on the working machine;
the second assignor is provided in or on the remote control terminal; and
the storage and/or the memory and the signal acceptor are provided in or on the working machine and/or the assistant.

12. The remote control system according to claim 10 or 11, wherein
the communication device performs wireless communication via a mobile telephone network, a wide area network, and/or a narrow area network; and
the first communicator and the second communicator perform wireless and/or wired communication via a mobile telephone network, a land-line telephone network, a wide area network, and/or a narrow area network.

13. The remote control system according to any one of claims 1 to 9, further comprising:
a communication device provided in or on the working machine to perform wireless communication; wherein
the remote control terminal includes a first communicator to perform communication;
the monitor, the first assignor, the storage and/or the memory, and the signal acceptor are provided in or on the working machine; and
the second assignor is provided in or on the remote control terminal.

14. The remote control system according to claim 13, wherein
the communication device performs wireless communication via a mobile telephone network, a wide area network, and/or a narrow area network; and
the first communicator performs wireless and/or wired communication via a mobile telephone network, a land-line telephone network, a wide area network, and/or a narrow area network.

15. The remote control system according to claim 12 or 14, wherein
the wide area network includes the Internet; and
the narrow area network includes a local area network.

16. The remote control system according to any one of claims 1 to 15, wherein
the working machine includes an agricultural machine to perform agricultural work in an agricultural field;
the monitor is provided in or on the agricultural machine and includes a camera and/or a sensor to detect an object in the surrounding area of the agricultural machine; and
the monitoring data includes image data of the surrounding area of the agricultural machine captured by the camera and/or detection data indicating a result of detection by the sensor.
